(19) **Europäisches Patentamt European Patent Office Office européen des brevets**

(11) **EP 1 942 007 B1**

(12) **EUROPEAN PATENT SPECIFICATION**

(45) Date of publication and mention
of the grant of the patent:
**08.08.2012 Bulletin 2012/32**

(21) Application number: **06811149.1**

(22) Date of filing: **03.10.2006**

(51) Int Cl.:
**B41M 1/18** (2006.01)   **B41M 1/06** (2006.01)
**C09D 11/02** (2006.01)

(86) International application number:
**PCT/JP2006/319809**

(87) International publication number:
**WO 2007/040234 (12.04.2007 Gazette 2007/15)**

(54) **PLANOGRAPHIC PRINTING METHOD AND INK**

FLACHDRUCKVERFAHREN UND TINTE

PROCÉDÉ D'IMPRESSION PLANOGRAPHIQUE ET ENCRE

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.10.2005 JP 2005290197**
          **03.10.2005 JP 2005290198**
          **03.10.2005 JP 2005290199**
          **03.10.2005 JP 2005290200**
          **03.10.2005 JP 2005290201**
          **07.12.2005 JP 2005353642**
          **07.12.2005 JP 2005353643**
          **07.12.2005 JP 2005353644**
          **27.09.2006 JP 2006263610**
          **27.09.2006 JP 2006263618**
          **02.10.2006 JP 2006271190**

(43) Date of publication of application:
**09.07.2008 Bulletin 2008/28**

(73) Proprietor: **TOYO INK MFG. CO., LTD.**
**Chuo-ku**
**Tokyo 104-0031 (JP)**

(72) Inventors:
• **OCHIAI, Yoshie**
 **c/o Tokyo Ink Mfg.Co., Ltd**
 **Tokyo 104-0031 (JP)**
• **SASAKI, Takeshi**
 **c/o Tokyo Ink Mfg.Co., Ltd**
 **Tokyo 104-0031 (JP)**
• **KURITA, Eiji**
 **c/o Tokyo Ink Mfg.Co., Ltd**
 **Tokyo 104-0031 (JP)**

• **KAWADA, Yasuyuki**
 **c/o Tokyo Ink Mfg.Co., Ltd**
 **Tokyo 104-0031 (JP)**
• **HOSOI, Isao**
 **c/o Tokyo Ink Mfg.Co., Ltd**
 **Tokyo 104-0031 (JP)**
• **MAEDA, Kazuhiro**
 **c/o Tokyo Ink Mfg.Co., Ltd**
 **Tokyo 104-0031 (JP)**
• **YOSHIDA, Satoru**
 **c/o Tokyo Ink Mfg.Co., Ltd**
 **Tokyo 104-0031 (JP)**

(74) Representative: **McCluskie, Gail Wilson**
**J A Kemp**
**14 South Square**
**Gray's Inn**
**London WC1R 5JJ (GB)**

(56) References cited:
**WO-A1-2004/000949**

• **KINOSHITAA.: 'Konodo Insatsu Gazo ni Kansuru Kenkyu (second report) - Iro Saigen Hikakuron -' KOKUSAI INSATSU DAIGAKKO KENKYU HOKOKU, [Online] vol. 5, March 2005, page PP2-6, XP003011294 Retrieved from the Internet: <URL:http://www.media-line.or.jp/igu/j/vol0 5.pdf>**
• **KINOSHITA A.: 'Nagoya deno Katsudo kara Konodo Insatsu eno Approach (Nomasho Jusho Kinen Koen)' DAI 2 BU KONODO INSATSU GAZO, [Online] 2003, page PP12-21, XP003011295 Retrieved from the Internet: <URL:http: //www.media-line.or.jp/kinoshita/ nagoya.pdf>**

EP 1 942 007 B1

- KINOSHITA A.: 'Daimoku 18 Offset Insatsu ni Okeru Kohin'i Gazo no Tenbo' 3-1 KONODO INSATSU, [Online] 2004, pages 1 - 4, XP003011601 Retrieved from the Internet: <URL: http://www.media-line.or.jp/igu/j/c/no 18.pdf>
- UKAI K.: 'Color Saigen no Kiso to Oyo <<Dai 8 Kai>> Insatsu Ink deno Iro Saigen' INSATSU ZASSHI, INSATSU GAKKAI SHUPPANBU LTD. vol. 85, no. 8, 2002, page PP31-35, XP003011296
- HASHIZUME Y.: 'Konodo Insatsu no Koka to Mechanism' INSATSU ZASSHI, INSATSU GAKKAI SHUPPANBU LTD. vol. 79, no. 9, 1996, page PP15-18, XP003011297
- FUJI PHOTO FILM CO., LTD.: 'Dare demo Wakaru 'Shin. Insatsu no Dekiru made'' INSATSU GAKKAI SHUPPANBU LTD. vol. 2ND ED., 2000, page PP32-34, PP134, PP137, XP003011298
- 'Color Chemical Jiten, Kabushiki Kaisha CMC' THE SOCIETY OF SYNTHETIC ORGANIC CHEMISTRY, JAPAN 1988, page PP641-642, PP669, PP682, PP687, PP693, XP003011299
- THE COLOR SCIENCE ASSOCIATION OF JAPAN: 'Shinpen Shikisai Kagaku Handbook, chapter 26', vol. 2ND ED., 1998, UNIVERSITY OF TOKYO PRESS page PP1106, XP003011300
- DIN ISO 2846-1,03/2000 referred to in "L*a*b* values of process inks for commercial printing", Technical information hubergroup 19.1.10 E, 09.2008, pages 1-4.

**Description**

TECHNICAL FIELD

The present invention relates to a lithographic printing method. The present invention also relates to an ink set used in the lithographic printing method.

BACKGROUND ART

The IT revolution that began in the 1990s has led to a rapid move towards digitalization of the environment surrounding printing sites. The work flow for a conventional printing system comprises an extremely large number of steps, including shooting, positive, scanning, data, design, EPS (Encapsulated Post Script), imposition, film, lithographic plate, and printing. In contrast, the work flow for a digitalized printing system comprises steps such as shooting with a digital camera, DTP (Desk Top Publishing), CTP (Computer to Plate), and printing. Digitalization has succeeded in dramatically shortening the printing workflow compared with conventional printing systems. Furthermore, with digitalization, conversion of the raw data to RGB format is becoming standard, and the data being handled is changing to offer a broader color reproduction range. In this type of environment, "standardization" of the environment surrounding the printing site is a very important point, and "Japan Color" is one standardization device that is attracting considerable attention.

However, in lithographic offset printing using Japan Color standard inks, which represents the most widely used form of printing, 4-color process (CMYK) inks are used, namely a yellow ink, a magenta ink, a cyan ink and a black ink. Accordingly, in order to conduct lithographic offset printing, the raw data generated as RGB must undergo a color conversion (color separation) to CMYK. In items printed using 4-color process inks, because the hue is expressed using subtractive color mixing, turbidity is generated within the hue each time a color is superimposed, meaning the color reproduction range is necessarily narrower than that of RGB. Furthermore, color reproduction may be poor depending on the RGB color space standard selected at the shooting stage, or on the method used for achieving the RGB to CMYK color conversion. In this manner, the difference in color reproducibility between RGB digital data, and the printed item obtained using 4-color process (CMYK) inks is a significant problem.

Particularly for the blue-violet region (corresponding with the "B" of RGB), which is expressed using a 2-color combination of the magenta and cyan inks, the chroma saturation and brightness are inferior to those expressed using a single ink comprising a violet pigment. As a result, reproducing colors in the "B" region of the raw RGB data using 4-color process (YMCK) inks has proven difficult.

Furthermore, if the yellow ink, which is typically the last color printed, is opaque, then a yellowing phenomenon occurs that has a large effect on each of the underlying inks, and this also makes reproduction of the RGB raw data more difficult. Accordingly, the yellow ink is preferably as transparent as possible, so that non-turbid secondary colors and tertiary colors can be obtained when overprinting other colors.

In order to address these issues, Japanese Patent Laid-Open No. 2001-260516 discloses a printing method using a 5- to 7-color ink set as a printing method capable of producing printed items with a high chroma saturation. In this printing method, a 6-color ink set (hexachrome printing) comprising orange and green inks in addition to the 4 process inks, and a 7-color ink set (HiFi printing) comprising orange, green and violet inks in addition to the 4 process inks are used as the ink set. In hexachrome printing, in order to suppress turbidity not only for primary colors, but also for secondary and tertiary colors, thereby broadening the color reproduction range, methods such as including a fluorescent pigment within a portion of the inks may be adopted. However, when these methods are used, other problems arise, including a deterioration in the printability (such as transfer faults and a reduction in gloss), and fading of the printed item caused by unsatisfactory light resistance. Furthermore, in these methods, the number of inks increases to 6 or 7 colors, meaning an expensive multicolor printer having six or more printer drums is required, and furthermore, color separation must also be conducted into 6 or more plates. Accordingly, because introducing these methods requires an enormous investment in equipment and complicated color management, their use has been restricted to limited areas.

Akihiro KINOSHITA (Kokusai Insatsu Daigakko Kenkyu Hokoku, Vol. 5, Kokusai Insatsu Daigakko, 2005.03, PP2-6) relates to a study on offset printing for high pigment inc nova F2010 for sheet fed offset printing.

Akihiro KINOSHITA (Dai 2 Bu Konodo Insatsu Gazo, 2003, PP12-21) discusses print images using highly concentrated ink.

Akihiro KINOSHITA (3-1 Konodo Insatsu, 2004, PP3) discusses prospects of high-quality picture image in offset printing.

Ken IKAI (Insatsu Zasshi, Vol. 85, No. 8, 2002, PP31-32, PP34-35) discusses the basics and applications of color reproduction, in particular color expressions by printing ink.

Yoshiyuki HASHIZUME (Insatsu Zasshi, Vol. 79, No. 9,1996, PP15-18) discusses the effects and mechanism of high-density printing.

"Dare demo Wakaxu 'Shin. Insatsu no Dekiru made" Fuji Photo Film, Co., Ltd., second edition, Insatsu Gakkai Shuppanbu Ltd., 2000, PP 32-34, PP134, PP137 relates to basic knowledge of light and color, in particular color mixing.

The Society of Synthetic Organic Chemistry, Japan, Color Chemical Jiten, Kabushiki Kaisha CMC, 1988, Ganryo, PP641-642, PP669, PP682, PP687, PP693 relates to the physical properties for several pigments.

WO 2004/000949 relates to warp-free pigment compositions comprising phthalocyanine pigments.

"Shinpen Shikisai Kagaku Handbook", The Color Science Association of Japan, second edition, University of Tokyo Press, 1998, PP1106 relates to color printing, in particular the transparency of ink.

DISCLOSURE OF INVENTION

The present invention has been designed to address some of theses issues associated with the conventional technology. In other words, an object of the present invention is to provide a printing method that uses widely available 4-color printers, and is capable of achieving a broader color range (gamut) than that obtained by printing with ISO Japan Color standard inks. Furthermore, another object of the present invention is to provide a printing method that uses widely available 4-color printers, and is capable of reproducing a color range that is extremely close to the RGB color reproduction range. Furthermore, yet another object of the present invention is to provide a printing method that uses widely available 4-color printers, and is capable of reproducing a color range that is extremely close to the "B" color reproduction range. Furthermore, yet another object of the present invention is to provide a printing method that uses widely available 4-color printers, and is capable of suppressing the yellowing phenomenon, enabling non-turbid secondary and tertiary colors to be obtained when the yellow ink is overprinted the ink of another color. Moreover, yet another object of the present invention is to provide an ink set and inks that can be used favorably within these printing methods, and to provide printed items printed using these printing methods.

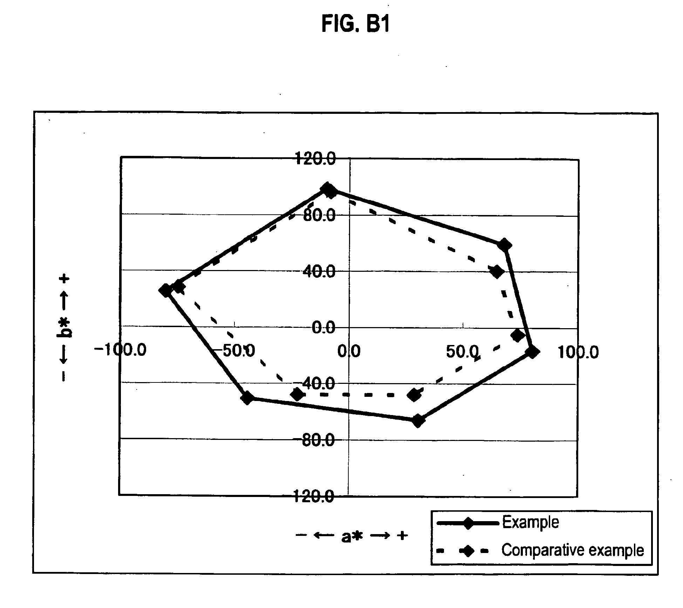

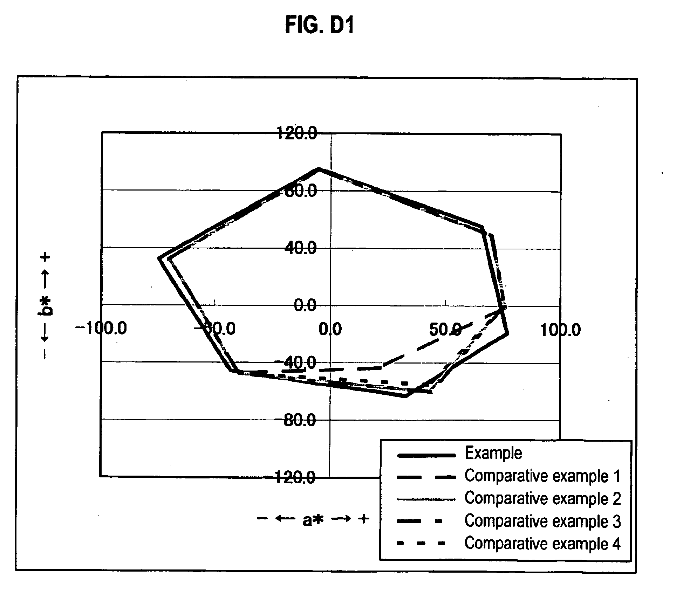

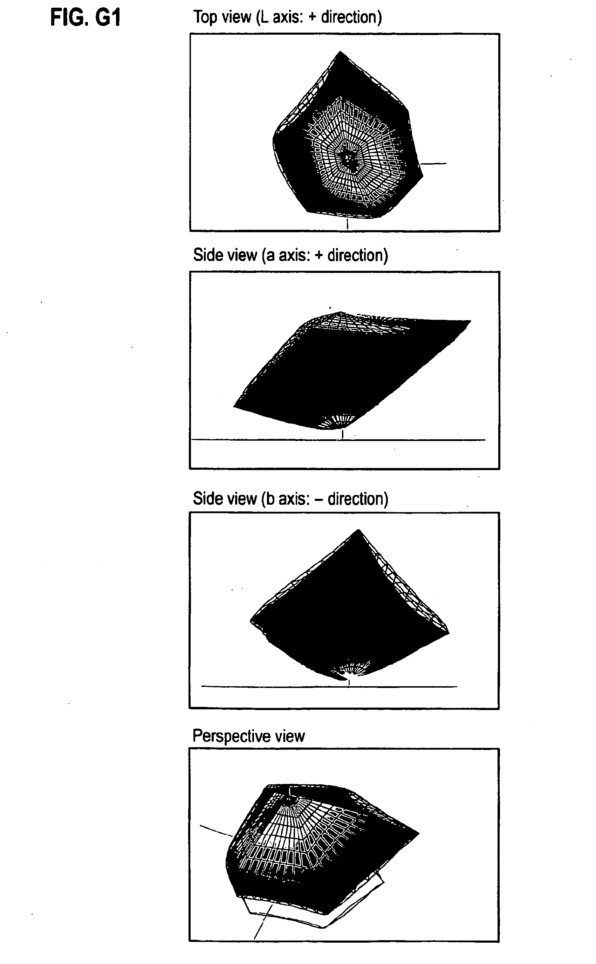

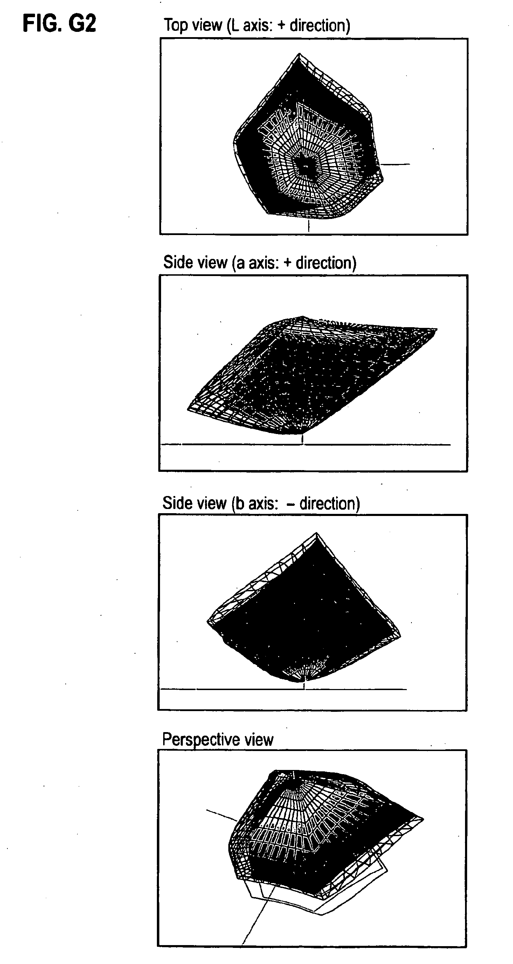

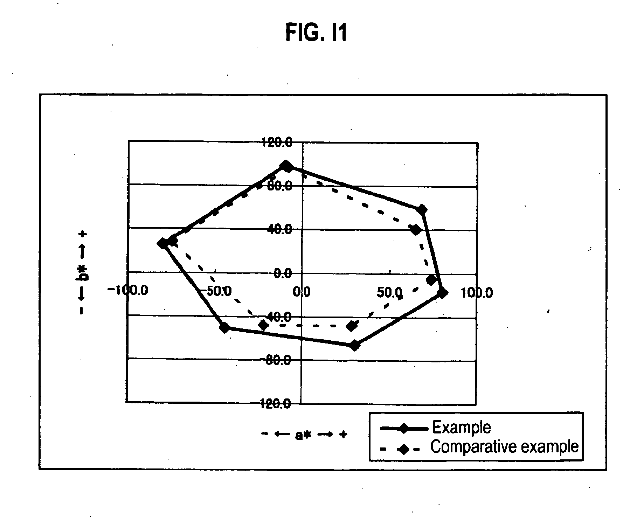

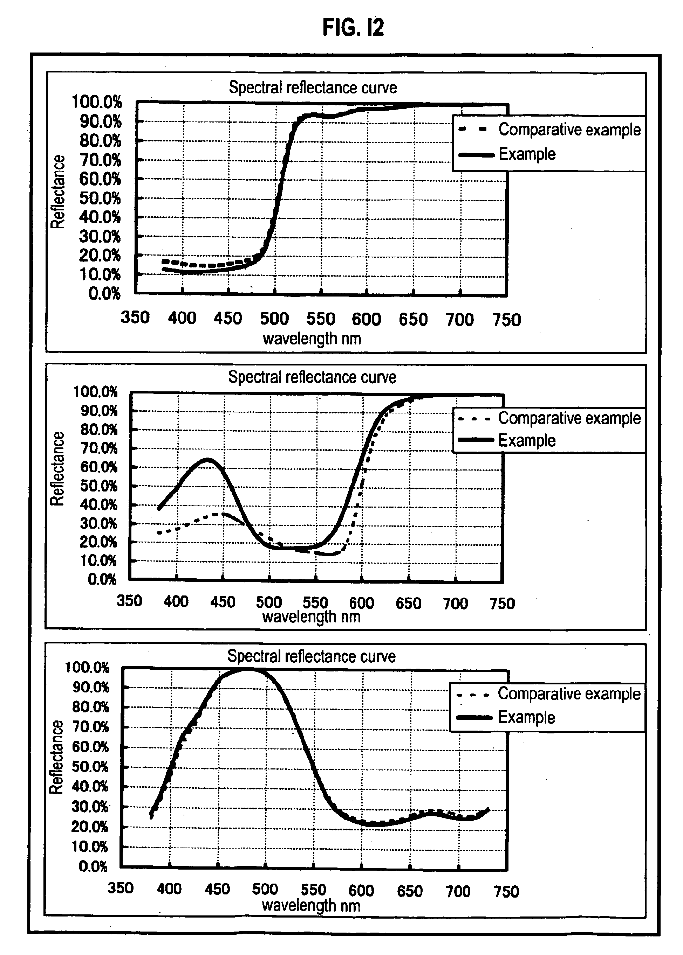

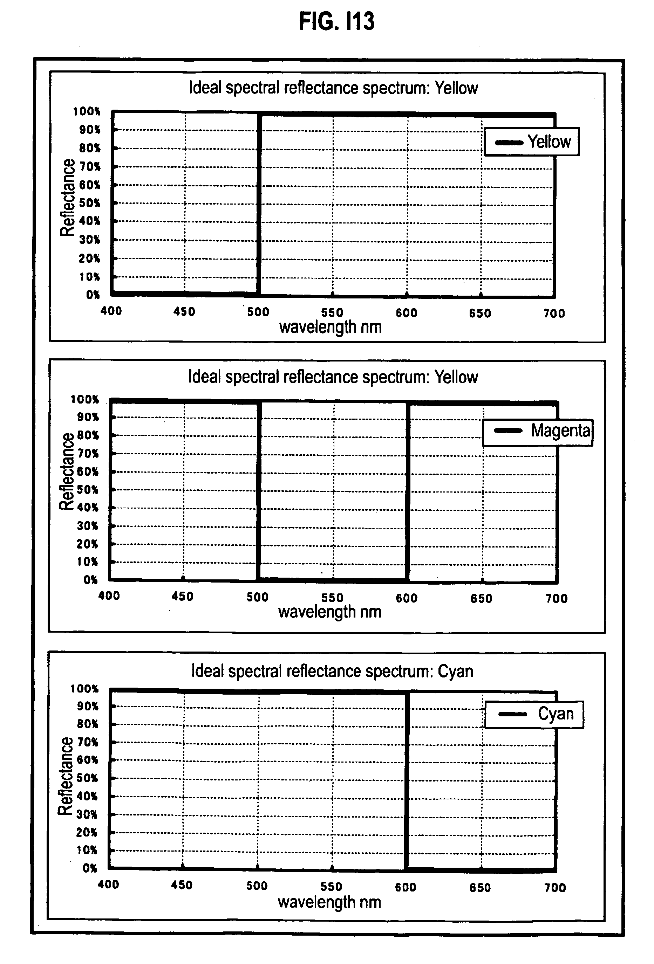

Generally, in order to broaden the color reproduction range, the spectral reflectance curve for each color must be brought closer to the ideal spectral reflectance curve. In other words, in the wavelength region from 400 nm to 700 nm in which humans perceive color (this wavelength region is termed "visible light"), it is said that the reflectance of each color, namely the yellow ink, the magenta ink and the cyan ink, should ideally be the reflectance defined below. The ideal spectral reflectance curves for the process inks are shown in Fig. 13.

- Yellow Ink: a reflectance of 100% in the wavelength region from 500 nm to 700 nm, and a reflectance of 0% in the wavelength region from 400 nm to 500 nm.
- Magenta Ink: a reflectance of 100% in the wavelength regions from 400 nm to 500 nm, and from 600 nm to 700 nm, and a reflectance of 0% in the wavelength region from 500 nm to 600 nm.
- Magenta Ink: a reflectance of 100% in the wavelength regions from 400 nm to 500 nm, and from 600 nm to 700 nm, and a reflectance of 0% in the wavelength region from 500 nm to 600 nm.
- Cyan Ink: a reflectance of 100% in the wavelength region from 400 nm to 600 nm, and a reflectance of 0% in the wavelength region from 600 nm to 700 nm.

However, in an offset printing ink set composed of the 4 process colors of yellow, magenta, cyan and black, the reflection spectrum of each ink differs from the ideal reflection spectrum. Because components exist that exhibit strong absorption in wavelength regions that should be completely reflected, namely components that cause turbidity, the color reproducibility is narrowed.

In order to achieve the objects described above, the following aspects are provided.

The present invention relates to a lithographic printing method that uses inks selected from amongst yellow, magenta, cyan and black inks, the method comprising using yellow, magenta and cyan inks for which the L*a*b* values for each color which monochromatic solid printing of the yellow, magenta and cyan inks is conducted at standard density values are within the ranges described below, and for which the L*a*b* values for each color which solid overprinting is conducted at standard density values using two inks selected from amongst the yellow, magenta and cyan inks are within the ranges described below. Here, the standard density values are from 1.40 to 1.44 for yellow, from 1.52 to 1.56 for magenta, and from 1.63 to 1.67 for cyan, the L*a*b* values for the yellow ink are L*: 87 to 95, a*: -4 to -12, b*: 90 to 100; for the magenta ink are L*: 50 to 55, a*: 75 to 83, b*: -14 to -20; for the cyan ink are L*: 52 to 58, a*: -40 to -45, b*: -45 to -53; for magenta and yellow ink overprinting are L*: 51 to 56, a*: 65 to 70, b*: 56 to 61; for cyan and yellow ink overprinting are L*: 47 to 53, a*: -77 to -83, b*: 25 to 32; and for cyan and magenta overprinting are L*: 23 to 29, a*: 28 to 33, b*: -63 to -68, wherein the yellow ink comprises a yellow pigment selected from C.I. Pigment Yellow 12 and C.I. Pigment Yellow 13, and exhibits a L* value of not more than 17 when solid printed at a density value within a range from 1.40 to 2.10 on top of the black ink that has been printed at a density value within a range from 1.85 to 1.90, the magenta ink comprises a pigment selected from C.I. Pigment Red 81 and C.I. Pigment Violet 1, the cyan ink comprises a β-type copper phthalocyanine with a specific surface area of at least 74 m$^2$/g which is selected from C.I. Pigment Blue 15:3 and C.I. Pigment Blue 15:4, and

the black ink comprises C.I. Pigment Black 7.

In one embodiment, the lithographic printing method of the invention is a method comprising using yellow, magenta, cyan and black inks for which the number of representable colors obtained when printing the yellow, magenta, cyan and black inks with the density values for the yellow, magenta and cyan inks set to standard density values is at least 1.1 times the number of representable colors obtained when printing yellow, magenta, cyan and black Japan Color standard inks with the density values for the yellow, magenta and cyan Japan Color standard inks set to standard density values, and printing the yellow, magenta, cyan and black inks with the density values for the yellow, magenta and cyan inks set to 1.0 to 1.5 times the standard density values. Here, the standard density values are from 1.40 to 1.44 for yellow, from 1.52 to 1.56 for magenta, and from 1.63 to 1.67 for cyan, and the number of representable colors refers to the number of colors that can be expressed when printing is conducted using either the yellow, magenta, cyan and black inks, or the yellow, magenta, cyan and black Japan Color standard inks, and is the number of colors that can be represented by the L*a*b* color system (wherein, L* = 10y (wherein, y is an integer from 0 to 10), a* = 10x (wherein, x is an integer from - 12 to 12), and b* = 10z (wherein, z is an integer from -12 to 12).

Furthermore, in yet another embodiment, the lithographic printing method of the present invention comprises using magenta and cyan inks for which the L*a*b* values for each color which monochromatic solid printing of the magenta and cyan inks is conducted at standard density values are within the ranges described below, and for which the L*a*b* values for each color which solid overprinting is conducted using the magenta and cyan inks at standard density values are within the ranges described below. Here, the standard density values are from 1.52 to 1.56 for magenta, and from 1.63 to 1.67 for cyan, the L*a*b* values for the magenta ink are L*: 50 to 55, a*: 75 to 83, b*: -14 to -20; for the cyan ink are L*: 52 to 58, a*: -40 to -45, b*: -45 to -53; and for magenta and cyan ink overprinting are L*: 23 to 29, a*: 28 to 33, b*: -63 to -68, wherein the yellow ink comprises a yellow pigment selected from C.I. Pigment Yellow 12 and C.I. Pigment Yellow 13, and exhibits a L* value of not more than 17 when solid printed at a density value within a range from 1.40 to 2.10 on top of the black ink that has been printed at a density value within a range from 1.85 to 1.90, the magenta ink comprises a pigment selected from C.I. Pigment Red 81 and C.I. Pigment Violet 1, the cyan ink comprises a β-type copper phthalocyanine with a specific surface area of at least 74 m$^2$/g which is selected from C.I. Pigment Blue 15:3 and C.I. Pigment Blue 15:4, and the black ink comprises C.L Pigment Black 7.

Furthermore, in yet another embodiment, the lithographic printing method of the present invention uses a plate formed by a frequency modulated screening process, the method comprising using yellow, magenta and cyan inks for which the L*a*b* values for each color which monochromatic solid printing of the yellow, magenta and cyan inks is conducted at standard density values are within the ranges described below, and for which the L*a*b* values for each color which solid overprinting is conducted at standard density values using two inks selected from amongst the yellow, magenta and cyan inks are within the ranges described below. Here, the standard density values are from 1.40 to 1.44 for yellow, from 1.52 to 1.56 for magenta, and from 1.63 to 1.67 for cyan, the L*a*b* values for the yellow ink are L*: 87 to 95, a*: -4 to -12, b*: 90 to 100; for the magenta ink are L*: 50 to 55, a*: 75 to 83, b*: -14 to -20; for the cyan ink are L*: 52 to 58, a*: -40 to -45, b*: -45 to -53; for magenta and yellow ink overprinting are L*: 51 to 56, a*: 65 to 70, b*: 56 to 61; for cyan and yellow ink overprinting are L*: 47 to 53, a*: -77 to -83, b*: 25 to 32; and for cyan and magenta overprinting are L*: 23 to 29, a*: 28 to 33, b*: -63 to -68, wherein the yellow ink comprises a yellow pigment selected from C.I. Pigment Yellow 12 and C.I. Pigment Yellow 13, and exhibits a L* value of not more than 17 when solid printed at a density value within a range from 1.40 to 2.10 on top of the black ink that has been printed at a density value within a range from 1.85 to 1.90, the magenta ink comprises a pigment selected from C.I. Pigment Red 81 and C.I. Pigment Violet 1, the cyan ink comprises a β-type copper phthalocyanine with a specific surface area of at least 74 m$^2$/g which is selected from C.I. Pigment Blue 15:3 and C.I. Pigment Blue 15:4, and the black ink comprises C.I. Pigment Black 7.

Furthermore, in yet another embodiment, the lithographic printing method of the present invention uses the yellow, magenta and cyan inks described below.

A yellow ink for which, if the maximum reflectance in the wavelength region from 400 nm to 700 nm is deemed to be 100%, the reflectance in the wavelength region from 400 nm to 480 nm is within a range from 1 to 20%, and the reflectance in the wavelength region from 530 nm to 700 nm is within a range from 90 to 100%.

A magenta ink for which, if the maximum reflectance in the wavelength region from 400 nm to 700 nm is deemed to be 100%, the maximum reflectance in the wavelength region from 400 nm to 500 nm is from 50 to 100%, the reflectance in the wavelength region from 500 nm to 560 nm is within a range from 1 to 20%, and the reflectance in the wavelength region from 630 nm to 700 nm is within a range from 90 to 100%.

A cyan ink for which, if the maximum reflectance in the wavelength region from 400 nm to 700 nm is deemed to be 100%, the reflectance in the wavelength region from 400 nm to 530 nm is within a range from 50 to 100%, and the reflectance in the wavelength region from 600 nm to 700 nm is within a range from 1 to 30%.

Furthermore, yet another aspect of the present invention relates to an ink set and inks used in the above lithographic printing method. Moreover, yet another aspect of the present invention relates to printed items printed using the above lithographic printing method, and printed items printed using the above ink set or inks.

This Application is related to the subject matter disclosed in prior Japanese Applications 2005-290197, 2005-290201, 2005-290198, 2005-290200 and 2005-290199, all filed on October 3, 2005, prior Japanese Applications 2005-353642, 2005-353643 and 2005-353644, all filed on December 7, 2005, prior Japanese Applications 2006-263610 and 2006-263618, both filed on September 27, 2006, and prior Japanese Application 2006-271190, filed on October 2, 2006.

BRIEF DESCRIPTION OF THE DRAWINGS

FIG. B1 is an a*b* two dimensional gamut plot obtained in an example B.
FIG. G1 shows L*a*b* color system color space diagrams obtained in an example G.
FIG. G2 shows L*a*b* color system color space diagrams obtained in the example G.
FIG. I1 is an a*b* two dimensional gamut plot obtained in an example I.
FIG. I2 shows spectral reflectance curves for each color ink obtained in the examples.
FIG. I3 shows ideal spectral reflectance curves for each color ink.

BEST MODE FOR CURRYING OUT THE INVENTION

In one embodiment, of the present invention the lithographic printing method uses inks selected from amongst yellow, magenta, cyan and black inks, the method comprising using yellow, magenta, cyan and black inks for which the number of representable colors obtained when printing the yellow, magenta, cyan and black inks with the density values for the yellow, magenta and cyan inks set to standard density values is at least 1.1 times the number of representable colors obtained when printing yellow, magenta, cyan and black Japan Color standard inks with the density values for the yellow, magenta and cyan Japan Color standard inks set to standard density values, and conducting printing with the density values for the yellow, magenta and cyan inks set to 1.0 to 1.5 times the standard density values.

A preferred method uses yellow, magenta, cyan and black inks for which the number of representable colors obtained when printing the yellow, magenta, cyan and black inks with the density values for the yellow, magenta, cyan and black inks set to standard density values is at least 1.1 times the number of representable colors obtained when printing yellow, magenta, cyan and black Japan Color standard inks with the density values for the yellow, magenta, cyan and black Japan Color standard inks set to standard density values, with printing conducted with the density values for the yellow, magenta, cyan and black inks set to 1.0 to 1.5 times the standard density values.

In the present invention, "the number of representable colors" is defined by the color reproduction range expressed when the color space in the L*a*b* color system (JIS Z 8729) obtained when each color ink is printed as a single color and with overprinting is partitioned by slicing at steps of 10 within a range from -120 to +120 along the transverse axis a*, at steps of 10 within a range from -120 to +120 along the longitudinal axis b*, and at steps of 10 within a range from 0 to 100 along the height L*.

Examples of methods of expressing the color reproduction range include the XYZ color system (CIE 1931 color system), the $X_{10}Y_{10}Z_{10}$ color system (CIE 1964 color system), the L*a*b* color system (CIE 1976 color system), the Hunter Lab color system, the Munsell color system, and the L*u*v* color system (CIE 1976 color system).

In the L*a*b* color system, the "brightness" is expressed by the L* value, and represents a degree of brightness that can be compared regardless of the hue. The color becomes brighter as the value of L* increases, and becomes duller as the value of L* decreases. Furthermore, the "hue", which differs for each color, is expressed using the a* and b* values. The a* value represents colors in a direction from red (+) through to green (-), and the b* value represents colors in a direction from yellow (+) through to blue (-). In each direction, the color becomes more vivid as the absolute value increases, and becomes duller as the absolute value approaches zero. In this color system, a single color can be digitized using the L*, a* and b* values.

Furthermore, in addition to the "brightness" and "hue", the degree of vividness is expressed by the "chroma" C. C can be determined using the formula shown below.

[Formula 1]

$$C = \sqrt{(a*)^2 + (b*)^2}$$

For C, the color becomes more vivid as the value increases, and becomes duller as the value decreases.

Moreover, using the numerical values for each color in the L*a*b* color system, very slight variations in color (color difference) can be represented numerically. The color difference (expressed as ΔE) between two colors can be determined using the formula shown below.

[Formula 2]

$$\varDelta E = \sqrt{(\varDelta L*)^2 + (\varDelta a*)^2 + (\varDelta b*)^2}$$

The smaller the absolute value of ΔE, the more similar the two colors appear, whereas the larger the absolute value of ΔE becomes, the more different the two colors become.

In the present invention, the L*a*b* color system is used to provide a gamut that considers not only the two dimensions of a* and b*, but also the brightness L*.

In order to determine the number of representable colors using the L*a*b* color system, a color chart such as the ISO 12642 chart (IT8 chart) is first printed using the yellow, magenta, cyan and black inks, the L*a*b* values for each color in the chart (928 colors in the case of the ISO 12642 chart) are measured using a spectroscopic measuring device (SpectroLino, manufactured by Gretag Macbeth), and an ICC profile is then generated from the measurement results. ISO Japan Color standard paper (such as "Tokubishi Art double-sided shiroku-ban paper/110 kg", manufactured by Mitsubishi Paper Mills Ltd.) can be used as the paper onto which the inks are printed.

Using the generated ICC profile and Photoshop from Adobe Systems Inc., the color reproduction range obtained using the yellow, magenta, cyan and black inks is converted to a color space represented by the L*a*b* color system.

Subsequently, the color space represented by the L*a*b* color system is sliced in the horizontal direction, at steps of 10 within a range from 0 to 100 along the L* axis, thus forming a series of L*a*b* color system (planar) chromaticity diagrams. Partition lines that are parallel to the b* axis are then inserted in the obtained L*a*b* color system (planar) chromaticity diagrams, at steps of 10 within a range from -120 to +120 along the a* axis. Similarly, partition lines that are parallel to the a* axis are inserted in the obtained L*a*b* color system (planar) chromaticity diagrams, at steps of 10 within a range from -120 to +120 along the b* axis. The number of points of intersection of these partition lines is the number of representable colors. The maximum number of colors in the color reproduction range from -120 to +120 along the a* axis, from -120 to +120 along the b* axis and from 0 to 100 along the L* axis is 6,875.

In other words, the number of representable colors is the number of colors that can be expressed when printing is conducted using either the yellow, magenta, cyan and black inks, or the yellow, magenta, cyan and black Japan Color standard inks, and is the number of colors that can be represented by the L*a*b* color system (wherein, L* = 10y (wherein, y is an integer from 0 to 10), a* = 10x (wherein, x is an integer from -12 to 12), and b* = 10z (wherein, z is an integer from -12 to 12).

Japan Color refers to standard colors for printing, formulated by the National Committee for ISO/TC130. In "Japan Color - Color Reproduction and Printing 2001", measured values (L*a*b* values) for the ISO 12642 pattern (928 colors, also referred to as IT8) are reported as data. The printing conditions required to reproduce this Japan Color - Color Reproduction and Printing 2001 data are the International Standards ISO 12647-2 standard conditions relating to commercial offset printing. The inks and printing paper are widely used within Japan (Japan Color 2001 specifies four types of printing paper). When typical Japan Color standard inks (for example, the "TK Hy-Unity colored inks" manufactured by Toyo Ink Mfg. Co., Ltd.) are printed onto a Japan Color standard paper (for example, "Tokubishi Art double-sided shiroku-ban paper/110 kg", manufactured by Mitsubishi Paper Mills Ltd.), the L*a*b* values for the monochromatic solid portions of yellow, magenta and cyan, and the C values calculated therefrom, are L*.: 86, a*: -7, b*: 92 and C: approximately 92 for the yellow ink, L*: 45, a*: 72, b*: -5 and C: approximately 72 for the magenta ink, and L*: 54, a*: -36, b*: -49 and C: approximately 61 for the cyan ink.

Japan Color standard inks are Japanese standard inks prescribed in the manner described below. First, the Japan Printing Ink Makers Association was commissioned by the TC130 National Committee to measure and summarize the color characteristics of representative process inks from the eight ink makers that belonged to the Japan Printing Ink Makers Association. Having received these results, the TC130 National Committee established standard spectral reflectance curves for the process inks. Inks that exemplified these standard spectral reflectance curves were designated as Japan Color standard inks. Examples include, in the case of sheet-fed inks, the "TK Hy-Unity colored inks" manufactured by Toyo Ink Mfg. Co., Ltd., and the "Space Color Fusion G" inks manufactured by Dainippon Ink and Chemicals, Incorporated.

Furthermore, Japan Color standard papers are Japanese standard papers prescribed in the manner described below. First, the average values of the optical properties for the surfaces of art papers manufactured by the six domestic paper makers were established as "Japan Paper Standard Property Values". Art papers from two of the makers that exhibited properties similar to these standard property values were designated as Japan Color standard papers. Currently, the optical properties of Japan Color standard papers are whiteness: $80 \pm 5$ (%), gloss: $75 \pm 2$ (%), L*: $93.0 \pm 3$, a*: $0.5 \pm 2$, and b*: $0.4 \pm 2$. Japan Color standard paper corresponds with a type 1 paper of the ISO standard that prescribes process management of offset printing.

In "Japan Color - Color Reproduction and Printing 2001", four types of paper are used, namely an art paper, a coated paper, a matte coated paper and a high-quality paper, and these represent domestic equivalents of the ISO prescribed papers. Examples of the art paper include "OK Golden Cask N" paper manufactured by Oji Paper Co., Ltd., "NPI Special Art" paper manufactured by Nippon Paper Group, Inc., and "Tokubishi Art double-sided N" paper manufactured by Mitsubishi Paper Mills Ltd. Examples of the coated paper include "OK Topkote N" paper manufactured by Oji Paper Co., Ltd., "NPI Coat" paper manufactured by Nippon Paper Group, Inc., and "Pearl Kote" paper manufactured by Mitsubishi Paper Mills Ltd. Examples of the matte coated paper include "OK Topkote Mat" paper manufactured by Oji Paper Co., Ltd., "U-Lite" paper manufactured by Nippon Paper Group, Inc., and "New V Matte" paper manufactured by Mitsubishi Paper Mills Ltd. Examples of the high-quality paper include "OK Prince high-quality" paper manufactured by Oji Paper Co., Ltd., "New NP1 high-quality" paper manufactured by Nippon Paper Group, Inc., and "Kinbishi" paper manufactured by Mitsubishi Paper Mills Ltd.

In the present invention, when evaluating the properties of an ink, such as the density and the L*a*b* values, an ISO Japan Color standard paper (such as "Tokubishi Art double-sided shiroku-ban paper/110 kg", manufactured by Mitsubishi Paper Mills Ltd.) can be used as the paper onto which the ink is printed. However, the papers used during actual lithographic printing using a method of the present invention or an ink set of the present invention are not restricted to Japan Color standard papers. All manner of papers, including the aforementioned art papers, coated papers, matte coated papers and high-quality papers can be used. Art papers are preferred.

In the present invention, the "density value" refers to the density value obtained by conducting solid printing of the yellow, magenta, cyan and black inks onto an ISO Japan Color standard paper (such as "Tokubishi Art double-sided shiroku-ban paper/110 kg", manufactured by Mitsubishi Paper Mills Ltd.), and then measuring the density of each color, namely the yellow, magenta, cyan and black inks, using a Gretag Macbeth D196 densitometer.

The standard density values for each color are from 1.40 to 1.44 for yellow, from 1.52 to 1.56 for magenta, from 1.63 to 1.67 for cyan, and from 1.88 to 1.92 for black. In the present invention, expressions such as "printing with the density values set to standard density values" or "printing at the standard density values" includes not only those cases where solid printing is conducted so that the actual printed item exhibits the standard density values, but also those cases where printing is conducted under printing conditions (such as the ink quantity and the printing pressure) that would yield a printed item with standard density values if solid printing were conducted.

In an embodiment, the lithographic printing method of the present invention, uses yellow, magenta, cyan and black inks for which the number of representable colors obtained when printing the yellow, magenta, cyan and black inks with the density values for the yellow, magenta and cyan inks set to their respective standard density values is at least 1.1 times the number of representable colors obtained when printing yellow, magenta, cyan and black Japan Color standard inks with the density values for the yellow, magenta and cyan Japan Color standard inks set to their respective standard density values. This number is preferably at least 1.1 times but not more than 1.85 times, and is even more preferably at least 1.15 times but not more than 1.80 times.

The number of representable colors for the Japan Color standard inks can be determined in the same manner as described above, using the yellow, magenta, cyan and black Japan Color standard inks.

**[0054]** , In one aspect of the present invention, the inks are printed under conditions that yield densities that are from 1.0 to 1.5 times the standard density values (namely, from 1.40 to 2.16 for yellow, from 1.52 to 2.34 for magenta, from 1.63 to 2.51 for cyan, and from 1.88 to 2.88 for black). The density values are preferably within a range from 1.0 to 1.4 times the standard density values (namely, from 1.40 to 2.02 for yellow, from 1.52 to 2.10 for magenta, from 1.63 to 2.34 for cyan, and from 1.88 to 2.67 for black), and even more preferably from 1.0 to 1.25 times (namely, from 1.40 to 1.80 for yellow, from 1.52 to 1.95 for magenta, from 1.63 to 2.09 for cyan, and from 1.88 to 2.40 for black).

There are no particular restrictions on the density values when actual lithographic printing is conducted using a method or an ink set of the present invention described below, and printing may be conducted at any density value. The density values are preferably within a range from 1.0 to 1.5 times the standard density values.

The inks used in the present invention exhibit a higher level of color reproducibility than conventional inks when the density is raised to a value that is 1.0 to 1.5 times the standard density value. Specifically, when the density is raised to 1.45 times the standard density value, the inks exhibit a reproducibility that is at least 1.5 times the number of representable colors at the standard density value.

A more specific method for obtaining this type of high color reproducibility preferably employs the method described below. Namely, a second aspect of the present invention is a lithographic printing method that uses inks selected from amongst yellow, magenta, cyan and black inks, the method comprising using yellow, magenta and cyan inks for which the L*a*b* values (and the C value) for each color which monochromatic solid printing of the yellow, magenta and cyan inks is conducted at standard density values are within the ranges described below, and for which the L*a*b* values (and the C value) for each color which solid overprinting is conducted at standard density values using two inks selected from amongst the yellow, magenta and cyan inks (hereafter, the overprinting of two inks may be represented by expressions such as "magenta ink x yellow ink" or "magenta x yellow") are within the ranges described below.

- Yellow ink L*: 87 to 95, and preferably from 88 to 93, a*: -4 to -12, and preferably from -5 to -10, b*: 90 to 100 and preferably from 92 to 98, C: 92 to 99
- Magenta ink L*: 50 to 55, and preferably from 51 to 54, a*: 75 to 83, and preferably from 76 to 81, b*: -14 to -20, and preferably from -15 to -18, C: 77 to 83
- Cyan ink L*: 52 to 58, and preferably from 52 to 57, a*: -40 to -45, and preferably from -41 to -44, b*: -45 to -53, and preferably from -46 to -51, C: 62 to 67
- Magenta ink x yellow ink overprinting (overprinting of yellow ink on top of magenta ink) L*: 51 to 56, a*: 65 to 70, b*: 56 to 61, C: 86 to 93
- Cyan ink x yellow ink overprinting (overprinting of yellow ink on top of cyan ink) L*: 47 to 53, a*: -77 to -83, b*: 25 to 32, C: 81 to 87
- Cyan ink x magenta ink overprinting (overprinting of magenta ink on top of cyan ink) L*: 23 to 29, a*: 28 to 33, b*: -63 to -68, C: 69 to 75

In this aspect of the invention, when ink overprinting is conducted to evaluate the ink properties, printing is conducted in the order: black ink, cyan ink, magenta ink, yellow ink. Although there are no particular restrictions on the ink sequence used when actual lithographic printing is conducted using a method or an ink set of the present invention, the order: black ink, cyan ink, magenta ink, yellow ink is preferred.

The complete color reproduction range that can be expressed on a single printed item (including color space other than the printed item) is termed the gamut. The simplest method of representing the gamut is a method in which the values for monochromatic solid portions (of yellow, magenta and cyan) and monochromatic solid overprinting portions (yellow x magenta, magenta x cyan, cyan x yellow), a total of 6 color values (a* vs. b*) are plotted on a two dimensional space with a* along the transverse axis and b* along the longitudinal axis, adjacent points are joined together to generate a hexagon, and the gamut is represented by the surface area of the hexagon. The greater the surface area of the hexagon, the broader the color reproduction range.

Furthermore, the method described below can also be used to obtain a high level of color reproducibility. Namely, in a third aspect of the present invention, the lithographic printing method of the present invention uses magenta and cyan inks for which the L*a*b* values for each color which monochromatic solid printing of the magenta and cyan inks is conducted at standard density values are within the ranges described below, and for which the L*a*b* values for each color which solid overprinting is conducted using the magenta and cyan inks at standard density values are within the ranges described below.

- Magenta ink L*: 50 to 55, and preferably from 51 to 54, a*: 75 to 83, and preferably from 76 to 81, b*: -14 to -20, and preferably from -15 to -18
- Cyan ink L*: 52 to 58, and preferably from 52 to 57, a*: -40 to -45, and preferably from
- 41 to -44, b*: -45 to -53, and preferably from -46 to -51
- Cyan ink x magenta ink overprinting L*: 23 to 29, a*: 28 to 33, b*: -63 to -68

When combinations of these inks are used, the C value is larger than that obtained using Japan Color standard inks, meaning the resulting printed items exhibit superior high chroma color reproducibility.

In this aspect of the invention, the fact that the number of reproducible colors in the RGB "B (blue-violet)" region, which is difficult to reproduce using conventional inks, can be increased is a significant feature of the present invention. In other words, in terms of the L*a*b* color system, compared with the case where conventional inks are used, using the inks of the present invention results in an increase in the number of reproducible colors within the range bounded by L*: 10 to 40, a*: 40 to 60 and b*: -40 to -70.

The color reproduction range for the RGB "B (blue-violet)" region, in the L*a*b* color system, is represented by a range in which L* is not more than 50 and is preferably from 10 to 40, a* is from 20 to 80, preferably from 30 to 70 and even more preferably from 30 to 60, and b* is from -20 to -80 and preferably from -30 to -70. Larger absolute values of a* and b* indicate a higher chroma hue for that color.

In order to achieve the above type of high color reproducibility, the use of the specific method described below is preferred.

Namely, in a fourth aspect of the present invention, the lithographic printing method of the present invention uses inks selected from amongst yellow, magenta, cyan and black inks, wherein the method uses the yellow, magenta and cyan inks described below.

A yellow ink for which, if the maximum reflectance in the wavelength region from 400 nm to 700 nm is deemed to be 100%, the reflectance in the wavelength region from 400 nm to 480 nm is within a range from 1 to 20%, and the reflectance in the wavelength region from 530 nm to 700 nm is within a range from 90 to 100%.

A magenta ink for which, if the maximum reflectance in the wavelength region from 400 nm to 700 nm is deemed to be 100%, the maximum reflectance in the wavelength region from 400 nm to 500 nm is from 50 to 100%, the reflectance in the wavelength region from 500 nm to 560 nm is within a range from 1 to 20%, and the reflectance in the wavelength region from 630 nm to 700 nm is within a range from 90 to 100%.

A cyan ink for which, if the maximum reflectance in the wavelength region from 400 nm to 700 nm is deemed to be 100%, the reflectance in the wavelength region from 400 nm to 530 nm is within a range from. 50 to 100%, and the reflectance in the wavelength region from 600 nm to 700 nm is within a range from 1 to 30%.

For the yellow ink, if the maximum reflectance in the wavelength region from 400 nm to 700 nm is deemed to be 100%, then the reflectance in the wavelength region from 400 nm to 480 nm is preferably from 1 to 20%, and the reflectance in the wavelength region from 530 nm to 700 nm is preferably from 90 to 100%. The reflectance in the wavelength region from 400 nm to 480 nm is even more preferably from 1 to 10%, and is most preferably from 1 to 5%. The reflectance in the wavelength region from 530 nm to 700 nm is even more preferably from 95 to 100%, and is most preferably from 98 to 100%.

For the magenta ink, if the maximum reflectance in the wavelength region from 400 nm to 700 nm is deemed to be 100%, then the maximum reflectance in the wavelength region from 400 nm to 500 nm is preferably from 50 to 100%, the reflectance in the wavelength region from 500 nm to 560 nm is preferably from 1 to 20%, and the reflectance in the wavelength region from 630 nm to 700 nm is preferably from 90 to 100%. The maximum reflectance in the wavelength region from 400 nm to 500 nm is even more preferably from 1 to 10%, and is most preferably from 1 to 5%.

For the cyan ink, if the maximum reflectance in the wavelength region from 400 nm to 700 nm is deemed to be 100%, then the reflectance in the wavelength region from 400 nm to 530 nm is preferably from 50 to 100%, and the reflectance in the wavelength region from 600 nm to 700 nm is preferably from 1 to 30%. The reflectance in the wavelength region from 400 nm to 530 nm is even more preferably from 80 to 100%, and is most preferably from 90 to 100%.

The ink reflectance can be measured using a Gretag Macbeth Spectro Eye (45/0, D50, 2-degree observer, Status T, Paper zero).

In order to achieved a high level of color reproducibility, a plate formed by frequency modulated screening (FM screening) may also be used.

A preferred method uses yellow, magenta, cyan and black inks for which the number of representable colors obtained when printing the yellow, magenta, cyan and black inks with the density values for the yellow, magenta, cyan and black inks set to standard density values is at least 1.4 times the number of representable colors obtained when printing yellow, magenta, cyan and black Japan Color standard inks with the density values for the yellow, magenta, cyan and black Japan Color standard inks set to standard density values, and for which the number of representable colors obtained when printing the yellow, magenta, cyan and black inks with the density values for the yellow, magenta, cyan and black inks set to 1.3 times the standard density values is at least 1.3 times the number of representable colors obtained when printing yellow, magenta cyan and black Japan Color standard inks with the density values for the yellow, magenta, cyan and black Japan Color standard inks set to 1.3 times the standard density values.

Density values that are 1.3 times the standard density values are from 1.82 to 1.87 for yellow, from 1.98 to 2.03 for magenta, from 2.12 to 2.17 for cyan, and from 2.44 to 2.50 for black.

In this aspect of the invention, yellow, magenta, cyan and black inks are used for which the number of representable colors obtained when printing the yellow, magenta, cyan and black inks with the density values for the yellow, magenta and cyan inks set to standard density values is at least 1.4 times the number of representable colors obtained when printing yellow, magenta, cyan and black Japan Color standard inks with the density values for the yellow, magenta and cyan Japan Color standard inks set to standard density values. This number is preferably at least 1.4 times but not more than 1.6 times, and is even more preferably at least 1.4 times but not more than 1.5 times.

In this aspect of the invention, yellow, magenta, cyan and black inks are used for which the number of representable colors obtained when printing the yellow, magenta, cyan and black inks with the density values for the yellow, magenta and cyan inks set to 1.3 times the standard density values is at least 1.3 times the number of representable colors obtained when printing yellow, magenta, cyan and black Japan Color standard inks with the density values for the yellow, magenta and cyan Japan Color standard inks set to 1.3 times the standard density values. This number is preferably at least 1.3 times but not more than 1.85 times, and is even more preferably at least 1.3 times but not more than 1.8 times.

An ink according to the present invention exhibits a property wherein when the density is increased, a higher color reproducibility is achieved than a conventional ink Specifically, when the density is increased to 1.3 times the standard density value, a high level of reproducibility is achieved that is at least 1.3 times the number of representable colors at the standard density value.

In order to achieve this type of high level of color reproducibility, use of the method described below is preferred.

Namely, in a sixth aspect of the present invention, the lithographic printing method of the present invention uses inks selected from amongst yellow, magenta, cyan and black inks, and uses a plate formed by a frequency modulated screening process, the method comprising using yellow, magenta and cyan inks for which the L*a*b* values (and the C value) for each color which monochromatic solid printing of the yellow, magenta and cyan inks is conducted at standard density values are within the ranges described below, and for which the L*a*b* values (and the C value) for each color which solid overprinting is conducted at standard density values using two inks selected from amongst the yellow, magenta and cyan inks are within the ranges described below.

- Yellow ink L*: 87 to 95, and preferably from 88 to 93, a*: -4 to -12, and preferably from -5 to -10, b*: 90 to 100 and preferably from 92 to 98, C: 92 to 99
- Magenta ink L*: 50 to 55, and preferably from 51 to 54, a*: 75 to 83, and preferably from 76 to 81, b*: -14 to -20, and preferably from -15 to -18, C: 77 to 83
- Cyan ink L*: 52 to 58, and preferably from 52 to 57, a*: -40 to -45, and preferably from
- 41 to -44, b*: -45 to -53, and preferably from -46 to -51, C: 62 to 67
- Magenta ink x yellow ink overprinting L*: 51 to 56, a*: 65 to 70, b*: 56 to 61, C: 86 to 93
- Cyan ink x yellow ink overprinting L*: 47 to 53, a*: -77 to -83, b*: 25 to 32, C: 81 to 87
- Cyan ink x magenta ink overprinting L*: 23 to 29, a*: 28 to 33, b*: -63 to -68, C: 69 to 75

The FM screening used in the present invention is also referred to as random screening or stochastic screening. The term FM screening used in the present invention refers to a process which uses dots of a fixed size, and in which color shading is expressed by altering the spacing or periodicity between dots, that is, by altering the frequency with which the basic dots are formed (the dot density). Specific examples include the Crystal Raster screening process, Diamond Screen process, Class screening process, Full Tone screening process, Velvet screening process, Accutone screening process, Megadot screening process, Clear screening process, and Monet screening process. Although each of these processes uses a different dot generation algorithm, they are all processes in which shading is expressed by varying the dot density.

In contrast, an AM screening process is a process in which gradation is expressed by the size of the dots (the dot surface area) in a regular pattern. Depending on the shape of the dots, a square dot screen or a chain dot screen or the like can be used. In an AM screening process, the number of screen lines (the number of aligned dots per inch) is used as a method of expressing the resolution. AM screening processes can be used at any resolution, from approximately 65 lines through to high-resolution line printing of approximately 1,500 lines. In typical commercial printing, a level of 175 lines is commonly used. In AM screening, because the alignment of the dots is regular, moire tend to occur when a plurality of dots overlap. In typical 4-color printing, following color separation of the raw color data, during plate separation into the 4 colors (YMCK), moire can be prevented from occurring by offsetting the dot screen angle for each color. Generally, a method is employed in which the dot screen angle for each color is distributed across an angle range from 0 to 90 degrees. However, although this method makes moire more difficult to discern, as long as regular dots are used, the problem of moire can not be prevented completely.

The fixed size dots used in an FM screening process preferably have a diameter of 1 to 50 $\mu$m. If the dot diameter is less than 1 $\mu$m, then although dependent on the printing method used, reproducing a stable dot diameter may be difficult, and the expressed density gradation tends to become unstable. If the diameter exceeds 50 $\mu$m, then the resolution deteriorates. Generally, if due consideration is also given to the printability, the dot diameter is preferably within a range from 10 to 20 $\mu$m.

FM screening processes are also a type of area gradation, and in this respect are similar to conventional AM screening processes, but the fact that the dots lack regularity is a significant feature. Accordingly, FM screening offers significant benefits, including eliminating moire and rosette patterns resulting from dot regularity.

In this method, inks that exhibit a broader color reproduction range than conventional Japan Color standard inks are used, thereby broadening the color reproduction range of the ink itself, and by combining this method with the use of an FM screen, an even greater improvement in the color reproduction range can be achieved. The reason for this observation is that, compared with the case where an AM screen is used, the ink transparency can be improved as a result of a reduction in the ink film thickness for highlights through to mid-tones, enabling the vividness of the image to be increased. Moreover, when the density is raised, whereas the Japan Color standard inks tend to develop turbidity, the inks used in this method exhibit superior transparency of the ink itself and a high degree of clarity, meaning turbidity can be suppressed to a minimum. As a result, the inks display favorable color reproducibility. Specifically, when the density values are increased to 1.3 times the standard density values, a number of representable colors that is at least 1.3 times that for the Japan Color standard inks is achieved.

Furthermore, in recent years, considerable progress has been achieved in the development of hybrid screening techniques, which combine the ease of use of AM screening with the high quality of FM screening. Hybrid screening is a process in which the type of screen used is determined in accordance with the shading of the image, so that the optimal expression is achieved for all sections of the picture. For example, in highlight regions (1 to 10%) and shadow regions (90 to 99%), gradation can be expressed by altering the density of dots of fixed size, as in FM screening, whereas in mid regions from 10 to 90%, gradation, can be expressed by altering the size of the dots, as in AM screening. Recently, the introduction of CTP has lead to an increase in high added-value printing that uses this type of new screening process. A plate formed using hybrid screening may also be used in the above method in place of the plate formed using FM screening.

Next is a description of an ink set which may be used in the various methods described above,
In other words, in a seventh aspect of the present invention, the lithographic printing method of the present invention uses an ink set comprising yellow, magenta, cyan and black inks, wherein the yellow ink comprises a disazo yellow-based compound as the colorant component, the magenta ink comprises a metal lake compound of a rhodamine-based dye as the colorant component, and the cyan ink comprises a phthalocyanine-based compound as the colorant component. Furthermore, in eighth aspect of the present invention, the lithographic printing method of the present invention uses an ink set comprising magenta and cyan inks, wherein the magenta ink comprises a metal lake compound of a rhodamine-based dye as the colorant component, and the cyan ink comprises a phthalocyanine-based compound as the colorant component In this case, the yellow and black inks can use conventional oxidation polymerization-type lithographic printing inks. Moreover, in ninth aspect of the present invention the lithographic printing method of the present uses an ink set comprising yellow, magenta, cyan and black inks and employs a plate formed by a frequency modulated screening method, wherein the yellow ink comprises a disazo yellow-based compound as the colorant component, the magenta ink comprises a metal lake compound of a rhodamine-based dye as the colorant component, and the cyan ink comprises a phthalocyanine-based compound as the colorant component.

The inks that constitute the ink set typically comprise a colorant component (a pigment), a synthetic resin, a vegetable oil, and a petroleum-based solvent If required, the ink may also include vehicle components that are dissolved under heat together with a gelling agent such as aluminum stearate or an aluminum chelate, and/or auxiliary agents such as abrasion resistance agents. An ink of the present invention can be produced using conventional methods.

The quantity of the colorant component is preferably within a range from 10 to 30% by weight relative to the total weight of the ink, the quantity of the synthetic resin is preferably within a range from 30 to 40% by weight relative to the total weight of the ink, the quantity of the vegetable oil is preferably within a range from 10 to 50% by weight relative to the total weight of the ink, and the quantity of the petroleum-based solvent is preferably within a range from 0 to 40% by weight relative to the total weight of the ink. In those cases where an auxiliary agent is also used, the quantity of the auxiliary agent is preferably within a range from 1 to 10% by weight relative to the total weight of the entire ink.

The yellow pigment used in the yellow ink is a disazo yellow-based compound chosen from C.I. Pigment Yellow 12 and C.I. Pigment Yellow 13. Combinations of the pigments may also be used. When the yellow ink is overprinted at a density value within a range from 1.40 to 2.10, on top of a black ink that has been printed at a density value within a range from 1.85 to 1.90, the resulting L* value is not more than 17. Provided the yellow ink has a transparency indicated by an L* value that does not exceed 17, conducting secondary color or tertiary color overprinting has little effect on the underlying ink, enabling a favorable color reproduction range to be obtained. In those cases where a disazo yellow-based compound is used, a C.I. Pigment Yellow 83 may be used as a complementary color.

The quantity of the yellow pigment (or the total quantity of all the yellow pigments in those cases where a combination of pigments is used) is preferably within a range from 5 to 15% by weight relative to the total weight of the ink. Furthermore, in those cases where a C.L Pigment Yellow 83 is used, the quantity is preferably from 0.5 to 10% by weight, and even more preferably from 2 to 5% by weight, relative to the combined weight of the C.I. Pigment Yellow 12 and C.I. Pigment Yellow 13.

The magenta pigment used in the magenta ink is chosen from C.I. Pigment Red 81 and C.I. Pigment Violet 1. C.I. Pigment Red 81 and C.I. Pigment Violet 1. Combinations of two pigments may also be used.

The quantity of the magenta pigment (or the total quantity of all the magenta pigments in those cases where a combination of pigments is used) is preferably within a range from 15 to 30% by weight, even more preferably from 18 to 29% by weight, and is most preferably from 20 to 28% by weight, relative to the total weight of the ink.

The cyan pigment used in the cyan ink is a β-copper phthalocyanine compound chosen from C.I. Pigment Blue 15:3 and C.I. Pigment Blue 15:4, Moreover, a C.I. Pigment Green 7 may be used as a complementary color. Combinations of the two pigments may also be used.

Copper phthalocyanine compounds are substances that exhibit crystal polymorphism (namely, same compound, different crystal structure). Copper phthalocyanine compounds are classified into $\alpha$, $\beta$, $\gamma$, $\varepsilon$, $\pi$, $\tau$, $\rho$, $\chi$ and R forms depending on differences in the crystal structure. The compounds used in the invention are β-type copper phthalocyanines, which exhibit excellent crystal stability and dispersibility, and have dispersibility, and have specific surface area of of at least 74 m$^2$/g. The specific surface area is preferably within a range from 74 to 80 m$^2$/g, is even more preferably from 74 to 78 m$^2$/g, and is most preferably from 74 to 76 m$^2$/g. In the present invention, the specific surface area is defined as the value calculated from the surface area using the formula shown below. The surface area can be measured using a fluid specific surface area measurement apparatus "FlowSorb II" manufactured by Shimadzu Corporation. The specific surface area (m$^2$/g) = surface area (m$^2$) / powder mass (g).

Halogenated copper phthalocyanine compounds in which the hydrogen atoms on the benzene rings of the copper phthalocyanine molecule are substituted with halogen compounds are preferably added in a quantity of 5 to 15% by weight, and even more preferably 8 to 11% by weight, relative to the total weight of the copper phthalocyanine compounds. From the viewpoint of broadening the color reproduction range for greens and violets when the cyan ink is overprinted with the yellow and magenta inks, without impairing the color reproduction range of cyan ink monochromatic printing, the use of a halogenated copper phthalocyanine compound is preferred.

The quantity of the cyan pigment (or the total quantity of all the cyan pigments in those cases where a combination of pigments is used) is preferably within a range from 10 to 25% by weight, even more preferably from 12 to 22% by weight, and is most preferably from 14 to 19% by weight, relative to the total weight of the ink. Furthermore, in those cases where a C.I. Pigment Green 7 is used, the quantity is preferably from 5 to 15% by weight, and even more preferably from 8 to 11 % by weight, relative to the combined weight of the C.I. Pigment Blue 15:3 and C.I. Pigment Blue 15:4. Alternatively, in those cases where a C.I. Pigment Green 7 is used, the quantity is preferably within a range from 0.5 to 2.0% by weight relative to the total weight of the ink.

Specifically, inks that comprise from 10 to 25% by weight of a C.I. Pigment Blue 15:3 and/or a C.I. Pigment Blue 15:4 relative to the total weight of the ink, and also comprise from 0.5 to 2.0% by weight of a C.I. Pigment Green 7 relative to the total weight of the ink are preferred.

The black pigment comprises C.I. Pigments Black 7. Combinations of two or more pigments may also be used. The quantity of the black pigment (or the total quantity of all the black pigments in those cases where a combination of pigments is used) is preferably within a range from 10 to 30% by weight, even more preferably from 15 to 25% by weight, and is most preferably from 16 to 20% by weight, relative to the total weight of the ink.

Examples of the synthetic resin include rosin-modified phenolic resins, petroleum resins, alkyd resins, rosin-modified alkyd resins, petroleum resin-modified alkyd resins, and rosin esters. The use of rosin-modified phenolic resins is preferred. The are no particular restrictions on such rosin-modified phenolic resins, but the weight average molecular weight is preferably within a range from 10,000 to 400,000, and is even more preferably from 20,000 to 300,000. If the molecular weight is less than 10,000, then the viscoelasticity of the ink deteriorates, whereas if the molecular weight exceeds 400,000, the ink fluidity tends to be unsatisfactory.

Examples of the vegetable oil include palm kernel oil, coconut oil, cottonseed oil, peanut oil, palm oil, corn oil, olive oil, linseed oil, corn oil, soybean oil, safflower oil, and wood oil, as well as heat-polymerized oils and oxygenated polymerized oils of these oils. Furthermore, in the present invention, these vegetable oils may be used either alone, or in combinations of two or more different oils.

The petroleum-based solvent is preferably a petroleum-based solvent that has an aromatic hydrocarbon content of not more than 1%. Furthermore, the aniline point is preferably within a range from 75 to 95°C, and even more preferably from 80 to 95°C. Moreover, the boiling point is preferably within a range from 260 to 350°C, and is even more preferably from 280 to 350°C. If the aniline point is less than 75%, then the ability of the solvent to dissolve the resin is overly powerful, which tends to delay the ink setting properties, whereas if the aniline point exceeds 95°C, the solubility of the resin tends to deteriorate, causing a deterioration in the gloss and the inking. If the boiling point is less than 260°C, then volatilization of the ink solvent within the printer increases, which causes a deterioration in the ink fluidity, and tends to impair the transferability of the ink to the roller, blanket or plate or the like. Furthermore, if the boiling point exceeds 350°C, then the drying properties of heat-set inks tends to deteriorate.

If required, the ink may also include appropriate additives such as gelling agents, pigment dispersants, metal driers, drying inhibitors, antioxidants, abrasion resistance improvers, anti-offset agents, nonionic surfactants, and polyhydric alcohols.

By using a lithographic printing method, and an ink set or inks provided by the present invention, the type of RGB color reproduction range expressed by 5-color, 6-color and 7-color printing, which adds orange, green and violet inks to the conventional 4 process colors of yellow, magenta, cyan and black, can be achieved using the 4 colors of yellow, magenta, cyan and black. In particular, the color reproduction range for the "B" (blue-violet) region can reproduced using the magenta and cyan inks. Furthermore, if required, a broader color reproduction range than that obtainable using 4 conventional process inks can be achieved by raising the density of the printed item. In the present invention, because a fluorescent pigment is not used as a device for broadening the color reproduction range of the printed item, a high chroma printed item can be obtained with no deterioration in the printability, and with no deterioration such as discoloration in the printed item over time. Moreover, by using a FM screen, a broader color reproduction range can be expressed than in conventional printing that uses-an AM screen. By using an FM screen, the thickness of the ink film is reduced, and in particular, the film thickness for portions in the highlights through to the mid-tones can be reduced significantly compared with those cases where an AM screen is used, enabling the setting properties and drying rate to be improved, and enabling offset to be suppressed

EXAMPLES

The present invention is described in more detail below based on a series of examples, although the present invention is in no way limited by these examples. In the following description, "parts" refers to "parts by weight", and "%" refers to "% by weight".

(Example B)

Rosin-modified Phenolic Resin Production Example

A four-necked flask fitted with a stirrer, a condenser, and a thermometer was charged with 1,000 parts of p-octylphenol, 850 parts of 35% formalin, 60 parts of 93% sodium hydroxide, and 1,000 parts of toluene, and the resulting mixture was reacted for 6 hours at 90°C. Subsequently, a hydrochloric acid solution comprising 125 parts of 6N hydrochloric acid and 1,000 parts of tap water was added to the mixture, and following stirring and settling, the supernatant phase was removed from the mixture, yielding 2,000 parts of a toluene solution of a resol-type phenolic resin with a non-volatile fraction of 49%. This solution was used as a resol solution.

A four-necked flask fitted with a stirrer, a condenser fitted with a moisture separation device, and a thermometer was charged with 1,000 parts of a gum rosin, the rosin was melted at 200°C under a stream of nitrogen gas, and 1,800 parts of the resol solution produced above was added, yielding a mixture. Following reaction of the mixture for 4 hours at 230°C while the toluene was removed, 110 parts of glycerol was added, and a reaction was then conducted for 10 hours at 260°C. A rosin-modified phenolic resin with an acid number of not more than 20, a weight average molecular weight of 50,000 and a cloud point in AF Solvent No. 6 (manufactured by Nippon Petrochemicals Co., Ltd.) of 90°C was obtained.

The cloud point refers to the temperature described below. Namely, first, 90% by weight of the AF solvent medium manufactured by Nippon Petrochemicals Co., Ltd. and 10% by weight of the resin are placed in a test tube, and the resin is then dissolved at 200°C, forming a resin solution. Subsequently, the temperature of the resin solution is gradually lowered. The point where the resin solution becomes cloudy is deemed the cloud point. A lower cloud point indicates a superior solubility of the resin in the solvent.

Varnish Production Example

40 parts of the rosin-modified phenolic resin, 15 parts of wood oil, 30 parts of soybean oil, 14 parts of AF Solvent No. 7 (a solvent manufactured by Nippon Petrochemicals Co., Ltd.) and 1.0 parts of ALCH (a gelling agent manufactured by Kawaken Fine Chemicals Co., Ltd.) were heated for 1 hour at 190°C under constant stirring, yielding a varnish.

Ink Example B1 (Yellow Ink)

Using the formulation shown in Table B1, 60 parts of the varnish obtained above was added gradually to a C.I. Pigment Yellow 12 (LIONOL YELLOW 1235-P, manufactured by Toyo Ink Mfg. Co., Ltd.) in a kneader under conditions including a temperature of 75°C, thus forming a mixture. The mixture was kneaded, and a primary dewatering was conducted. Subsequently, with the kneader temperature set to 100 to 120°C, and under reduced pressure conditions of 76 mmHg, the kneader was evacuated for one hour, thereby conducting a secondary dewatering that reduced the moisture within the mixture to not more than 0.5% by weight. Following dewatering, the remainder of the varnish and a petroleum-based solvent (AF Solvent No. 5, manufactured by Nippon Petrochemicals Co., Ltd.) were added and kneaded to dilute the mixture, and the resulting undispersed base ink was then removed from the kneader. The removed undispersed base ink was then milled using a 3-roll mill with the roll temperature set to 60°C, until the particle size of the pigment, as measured by a dispersed particle size measuring device (a grind meter), was not greater than 7.5 μm, thereby yielding a yellow base ink B1. Subsequently, using the formulation shown in Table B2, the base ink B1 was combined with the varnish, soybean oil, a compound (New Abrasion Resistance Compound, manufactured by Toyo Ink Mfg. Co., Ltd.), a metal drier (DRN Drier IK, manufactured by Toyo Ink Mfg. Co., Ltd.) and a drying inhibitor (Drying Inhibitor CP, manufactured by Toyo Ink Mfg. Co., Ltd.), thus yielding a yellow ink B1.

Ink Example B2 (Magenta Ink)

Using the same procedure as that described for the yellow ink B1 and using the formulation shown in Table B1, a C.I. Pigment Red 81 (FANAL ROSE RNN-P, manufactured by Fuji-Kasei Co., Ltd.) was used to prepare a magenta base ink B2. Subsequently, using the formulation shown in Table B2, the soybean oil, compound, metal drier and drying inhibitor were added to the base ink B2, thus yielding a magenta ink B2.

Ink Example B3 (Cyan Ink)

Using the formulation shown in Table B2, a C.I. Pigment Blue 15:3 (LIONOL BLUE GLA-SD, manufactured by Toyo Ink Mfg. Co., Ltd., specific surface area: 74.625 m$^2$/g) and a C.I. Pigment Green 7 (LIONOL GREEN YS-2A, manufactured by Toyo Ink Mfg. Co., Ltd.) were mixed with the varnish, and milling was conducted until the particle size of the pigments, as measured by a dispersed particle size measuring device (a grind meter), was not greater than 7.5 μm. The soybean oil, compound, metal drier and drying inhibitor were then added to the mixture, yielding a cyan ink B3.
Typical oxidation polymerization-type lithographic printing inks (the various color TK Hy-Unity inks (manufactured by Toyo Ink Mfg. Co., Ltd.)) were used as comparative example inks.

Printing Evaluation Test

Using the inks of the example and comparative example described above, monochromatic solid printing and solid overprinting were conducted under the printing conditions listed below. As the black ink, a typical oxidation polymerization-type lithographic printing ink (TK Hy-Unity Black (manufactured by Toyo Ink Mfg. Co., Ltd.)) was used.

Printing Conditions

Printer: Heidelberg Speedmaster, a kikuzen-size 4-color printer (manufactured by Heidelberg Japan)
Paper: Tokubishi Art double-sided 110 kg (manufactured by Mitsubishi Paper Mills Ltd.)
Dampening Water: a 2.0% tap water solution of Astro Mark 3 (manufactured by Nikken Chemical Laboratory Ltd.)
Print Speed: 10,000 sheets/hour Density: the density values of the monochromatic (yellow, magenta, cyan and black) solid printed portions within the printed item were measured using a Gretag Macbeth D196. Yellow: 1.40 to 1.44, Magenta: 1.52 to 1.56, Cyan: 1.63 to 1.67, Black: 1.88 to 1.92.

Method of Evaluating Printed Items

Color Measurement: Using an X-Rite 938 (manufactured by X-Rite, Inc.), the L*a*b* values for the monochromatic solid portions (yellow, magenta and cyan) and the monochromatic solid overprinted portions (yellow × magenta, magenta × cyan, cyan × yellow) of the printed item were measured.
The C value was determined from the a* and b* values, using the formula shown below.

[Formula B1]

$$C = \sqrt{(a*)^2 + (b*)^2}$$

Gloss: the 60° -60° reflective gloss was measured using a digital gloss meter, manufactured by Murakami Color Research Laboratory Co., Ltd.
The results are shown in Table B3. Compared with the comparative example, the example inks exhibited larger C values, and the chroma of the printed item was higher. Furthermore, when the results were compared in a two dimensional gamut obtained by plotting each of the a* and b* values within a two dimensional space with a* along the transverse axis and b* along the longitudinal axis, the example yielded a broader color reproduction range than the comparative example (see FIG. B1).
[Table B1]

|  | Base Ink B1 | Base Ink B2 |
|---|---|---|
| LIONOL YELLOW 1235P | 25 |  |
| FANAL ROSE RNN-P |  | 36 |

(continued)

|  | Base Ink B1 | Base Ink B2 |
|---|---|---|
| Varnish | 69 | 61 |
| Petroleum-based solvent | 6 | 3 |
|  |  |  |
| Total | 100 | 100 |

[Table B2]

|  | Example | | |
|---|---|---|---|
|  | Yellow ink B1 | Magenta ink B2 | Cyan ink B3 |
| Base ink B1 | 50 |  |  |
| Base ink B2 |  | 75 |  |
| LIONOL BLUE GLA-SD |  |  | 17 |
| LIONOL GREEN YS-2A |  |  | 1.5 |
| Varnish | 35 | 10 | 64.5 |
| Soybean oil | 8 | 8 | 10 |
| Compound | 5 | 5 | 5 |
| Metal drier | 1.5 | 1.5 | 1.5 |
| Drying inhibitor | 0.5 | 0.5 | 0.5 |
|  |  |  |  |
| Total | 100 | 100 | 100 |

[Table B3]

|  |  | Density | Gloss | L | a | b | C |
|---|---|---|---|---|---|---|---|
| Example B | Yellow ink 1 | 1.44 | 77.8 | 92.9 | -9.8 | 98.5 | 99.0 |
|  | Magenta ink 2 | 1.55 | 71.7 | 53.9 | 80.4 | -16.7 | 82.1 |
|  | Cyan ink 3 | 1.66 | 63.5 | 56.2 | -44.0 | -50.4 | 66.9 |
|  | Yellow ink 1 × magenta ink 2 | - | 87.1 | 54.1 | 68.0 | 59.2 | 90.2 |
|  | Magenta ink 2 × cyan ink 3 | - | 82.6 | 26.9 | 30.5 | -66.0 | 72.7 |
|  | Cyan ink 3 × yellow ink 1 | - | 85.9 | 51.2 | -80.3 | 25.7 | 84.3 |
| Comparative example B | Yellow ink | 1.42 | 73.5 | 86.8 | -8.0 | 96.7 | 97.0 |
|  | Magenta ink | 1.55 | 70.2 | 44.9 | 74.0 | -5.0 | 74.1 |
|  | Cyan ink | 1.64 | 61.3 | 54.6 | -22.4 | -47.7 | 52.7 |
|  | Yellow ink × magenta ink | - | 71.9 | 44.1 | 64.8 | 40.3 | 76.3 |
|  | Magenta ink × cyan ink | - | 78.1 | 20.4 | 28.8 | -47.9 | 55.9 |
|  | Cyan ink × yellow ink | - | 74.4 | 48.2 | -74.7 | 28.5 | 79.9 |

(Example D)

Rosin-modified Phenolic Resin Production Example

A four-necked flask fitted with a stirrer, a condenser, and a thermometer was charged with 1,000 parts ofp-octylphenol, 850 parts of 35% formalin, 60 parts of 93% sodium hydroxide, and 1,000 parts of toluene, and the resulting mixture was reacted for 6 hours at 90°C. Subsequently, a hydrochloric acid solution comprising 125 parts of 6N hydrochloric acid and 1,000 parts of tap water was added to the mixture, and following stirring and settling, the supernatant phase was removed from the mixture, yielding 2,000 parts of a toluene solution of a resol-type phenolic resin with a non-volatile fraction of 49%. This solution was used as a resol solution.

A four-necked flask fitted with a stirrer, a condenser fitted with a moisture separation device, and a thermometer was charged with 1,000 parts of a gum rosin, the rosin was melted at 200°C under a stream of nitrogen gas, and 1,800 parts of the resol solution produced above was added, yielding a mixture. Following reaction of the mixture for 4 hours at 230°C while the toluene was removed, 110 parts of glycerol was added, and a reaction was then conducted for 10 hours at 260°C. A rosin-modified phenolic resin with an acid number of not more than 20, a weight average molecular weight of 50,000 and a cloud point in AF Solvent No. 6 (manufactured by Nippon Petrochemicals Co., Ltd.) of 90°C was obtained. The cloud point refers to the temperature described below. Namely, first, 90% by weight of the AF solvent medium manufactured by Nippon Petrochemicals Co., Ltd. and 10% by weight of the resin are placed in a test tube, and the resin is then dissolved at 200°C, forming a resin solution. Subsequently, the temperature of the resin solution is gradually lowered. The point where the resin solution becomes cloudy is deemed the cloud point. A lower cloud point indicates a superior solubility of the resin in the solvent.

Varnish Production Example

40 parts of the rosin-modified phenolic resin, 15 parts of wood oil, 30 parts of soybean oil, 14 parts of AF Solvent No. 5 (a solvent manufactured by Nippon Petrochemicals Co., Ltd.) and 1.0 parts of ALCH (a gelling agent manufactured by Kawaken Fine Chemicals Co., Ltd.) were heated for 1 hour at 190°C under constant stirring, yielding a varnish.

Ink Example D1 (Magenta Ink)

Using the formulation shown in Table D1, 60 parts of the varnish obtained above was added gradually to a C.I. Pigment Red 81 (FANAL ROSE RNN-P, manufactured by Fuji-Kasei Co., Ltd.) in a kneader under conditions including a temperature of 75°C, thus forming a mixture. The mixture was kneaded, and a primary dewatering was conducted. Subsequently, with the kneader temperature set to 100 to 120°C, and under reduced pressure conditions of 76 mmHg, the kneader was evacuated for one hour, thereby conducting a secondary dewatering that reduced the moisture within the mixture to not more than 0.5% by weight. Following dewatering, the remainder of the varnish and a petroleum-based solvent (AF Solvent No. 5, manufactured by Nippon Petrochemicals Co., Ltd.) were added and kneaded to dilute the mixture, and the resulting undispersed base ink was then removed from the kneader. The removed undispersed base ink was then milled using a 3-roll mill with the roll temperature set to 60°C, until the particle size of the pigment, as measured by a dispersed particle size measuring device (a grind meter), was not greater than 7.5 $\mu$m, thereby yielding a magenta base ink D1. Subsequently, using the formulation shown in Table D2, the base ink D1 was combined with the varnish, a vegetable oil (linseed oil), a compound (New Abrasion Resistance Compound, manufactured by Toyo Ink Mfg. Co., Ltd.), a metal drier (DRN Drier IK, manufactured by Toyo Ink Mfg. Co., Ltd.) and a drying inhibitor (Drying Inhibitor CP, manufactured by Toyo Ink Mfg. Co., Ltd.), thus yielding a magenta ink D1.

Ink Example D2 (Cyan Ink)

Using the formulation shown in Table D2, a C.I. Pigment Blue 15:3 (LIONOL BLUE GLA-SD, manufactured by Toyo Ink Mfg. Co., Ltd., specific surface area: 74.625 m$^2$/g) and a C.I. Pigment Green 7 (LIONOL GREEN YS-2A, manufactured by Toyo Ink Mfg. Co., Ltd.) were mixed with the varnish, and milling was conducted until the particle size of the pigments, as measured by a dispersed particle size measuring device (a grind meter), was not greater than 7.5 $\mu$m. The vegetable oil, compound, metal drier and drying inhibitor were then added to the mixture, yielding a cyan ink D2.

Ink Comparative Example D3 (Violet Ink)

Using the formulation shown in Table D2, a C.I. Pigment Violet 23 (LIONOGEN VIOLET R6200, manufactured by Toyo Ink Mfg. Co., Ltd.) was mixed with the varnish, and milling was conducted until the particle size of the pigment, as measured by a dispersed particle size measuring device (a grind meter), was not greater than 7.5 $\mu$m. The vegetable

oil, compound, metal drier and drying inhibitor were then added to the mixture, yielding a violet ink D3.

Typical oxidation polymerization-type lithographic printing inks (the various color TK Hy-Unity inks (manufactured by Toyo Ink Mfg. Co., Ltd.)) were used as comparative example inks.

Printing Evaluation Test

Using the inks of the example and comparative example described above, monochromatic solid printing and solid overprinting were conducted under the printing conditions listed below. As the yellow and black inks, typical oxidation polymerization-type lithographic printing inks (TK Hy-Unity Yellow and Black (manufactured by Toyo Ink Mfg. Co., Ltd.)) were used.

Example: Printing was conducted using the magenta ink D1 the cyan ink D2, and conventional yellow and black inks.

Comparative example 1: Printing was conducted using conventional yellow, magenta, cyan and black inks.

Comparative examples 2 to 4: Using the same conditions as the comparative example 1, the violet ink D3 was used for the magenta × cyan overprinting portion (the blue-violet hue), and printing was conducted with the transfer quantity of only the violet ink altered to one of three stages.

Printing Conditions

Printer: Heidelberg Speedmaster, a kikuzen-size 5-color printer (manufactured by Heidelberg Japan)

Paper: Tokubishi Art double-sided 110 kg (manufactured by Mitsubishi Paper Mills Ltd.)

Dampening Water: a 2.0% tap water solution of Astro Mark 3 (manufactured by Nikken Chemical Laboratory Ltd.)

Print Speed: 10,000 sheets/hour

Density: the density values of the monochromatic solid portions within the printed item were measured using a Gretag Macbeth D196. Yellow: 1.40 to 1.44, Magenta: 1.52 to 1.56, Cyan: 1.63 to 1.67, Black: 1.88 to 1.92.

Furthermore, in terms of the violet ink, because density control is generally impossible, printing was conducted with varied ink transfer quantities, across an arbitrary hue range.

Method of Evaluating Printed Items

Color Measurement: Using an X-Rite 938, the L*a*b* values for the monochromatic solid portions (yellow, magenta, cyan and violet) and the monochromatic solid overprinted portions (yellow × magenta, magenta × cyan, cyan × yellow) of the printed item were measured.

The C value and ΔE value were determined from the L*, a* and b* values, using the formulas shown below.

[Formula D1]

$$C = \sqrt{(a*)^2 + (b*)^2}$$

$$\Delta E = \sqrt{(\Delta L*)^2 + (\Delta a*)^2 + (\Delta b*)^2}$$

Gloss: the 60°-60° reflective gloss was measured using a digital gloss meter, manufactured by Murakami Color Research Laboratory Co., Ltd.

The results are shown in Table D3. Compared with the comparative example, the magenta × cyan ink overprinted portion in the example exhibited a larger C value. In other words, in the example, the chroma of the printed item was higher, and the chroma of the magenta × cyan ink portion was close to the chroma of the violet ink.

Furthermore, the ΔE value for the magenta × cyan ink portion in the example and the violet portion in the comparative examples were small, and the hues were similar. Moreover, when the results were compared in a two dimensional gamut obtained by plotting each of the a* and b* values within a two dimensional space with a* along the transverse axis and b* along the longitudinal axis, then for the blue violet hues, the example yielded a broader color reproduction range than the comparative examples (see FIG. D1).

[Table D1]

|  | Base Ink D1 |
|---|---|
| FANAL ROSE RNN-P | 36 |
| Varnish | 60 |
| Petroleum-based solvent | 4 |
|  |  |
| Total | 100 |

[Table D2]

|  | Example | | Comparative example |
|---|---|---|---|
|  | Magenta ink D1 | Cyan ink D2 | Violet ink D3 |
| Base ink D1 | 75 |  |  |
| LIONOL BLUE GLA-SD |  | 18 |  |
| LIONOL GREEN YS-2A |  | 1.5 |  |
| LIONOGEN VIOLET R6200 |  |  | 15 |
|  |  |  |  |
| Varnish | 10 | 65 | 65 |
| Vegetable oil | 8 | 8.5 | 13 |
| Compound | 5 | 5 | 5 |
| Metal drier | 1.5 | 1.5 | 1.5 |
| Drying inhibitor | 0.5 | 0.5 | 0.5 |
|  |  |  |  |
| Total | 100 | 100 | 100 |

[Table D3]

|  |  | Density | Gloss | L | a | b | C | ΔE |
|---|---|---|---|---|---|---|---|---|
| Example D | Yellow ink | 1.44 | 72.5 | 89.4 | -5.5 | 95.4 | 95.5 |  |
|  | Magenta ink | 1.53 | 71.4 | 51.8 | 76.9 | -19.3 | 79.3 |  |
|  | Cyan ink | 1.65 | 64.5 | 56.1 | -42.9 | -45.7 | 62.7 |  |
|  | Yellow ink × magenta ink | - | 80.5 | 51.0 | 65.9 | 55.5 | 86.2 |  |
|  | Magenta ink × cyan ink | - | 82.0 | 24.1 | 32.9 | -63.0 | 71.1 | - |
|  | Cyan ink × yellow ink | - | 79.5 | 50.5 | -74.7 | 32.5 | 81.5 |  |

(continued)

|  |  | Density | Gloss | L | a | b | C | ΔE |
|---|---|---|---|---|---|---|---|---|
| Comparative example D1 | Yellow ink | 1.44 | 72.3 | 89.4 | -5.2 | 95.4 | 95.5 | |
| | Magenta ink | 1.54 | 68.5 | 45.7 | 75.9 | -0.7 | 75.9 | |
| | Cyan ink | 1.66 | 61.6 | 56.6 | -39.0 | -47.4 | 61.4 | |
| | Yellow ink × magenta ink | - | 75.7 | 45.9 | 70.1 | 49.0 | 85.5 | |
| | Magenta ink × cyan ink | - | 77.5 | 22.3 | 21.5 | -43.5 | 48.5 | 21.7 |
| | Cyan ink × yellow ink | - | 76.0 | 50.8 | -70.1 | 31.9 | 77.0 | |
| Comparative example D2 | Violet ink | - | 60.5 | 23.3 | 42.2 | -60.0 | 73.4 | 10.4 |
| Comparative example D3 | Violet ink | - | 62.7 | 22.6 | 43.5 | -60.1 | 74.2 | 12.4 |
| Comparative example D4 | Violet ink | - | 66.7 | 21.7 | 42.4 | -55.1 | 69.5 | 13.5 |

(Example G)

Rosin-modified Phenolic Resin Production Example

A four-necked flask fitted with a stirrer, a condenser, and a thermometer was charged with 1,000 parts of p-octylphenol, 850 parts of 35% formalin, 60 parts of 93% sodium hydroxide, and 1,000 parts of toluene, and the resulting mixture was reacted for 6 hours at 90°C. Subsequently, a hydrochloric acid solution comprising 125 parts of 6N hydrochloric acid and 1,000 parts of tap water was added to the mixture, and following stirring and settling, the supernatant phase was removed from the mixture, yielding 2,000 parts of a toluene solution of a resol-type phenolic resin with a non-volatile fraction of 49%. This solution was used as a resol solution.
A four-necked flask fitted with a stirrer, a condenser fitted with a moisture separation device, and a thermometer was charged with 1,000 parts of a gum rosin, the rosin was melted at 200°C under a stream of nitrogen gas, and 1,800 parts of the resol solution produced above was added, yielding a mixture. Following reaction of the mixture for 4 hours at 230°C while the toluene was removed, 110 parts of glycerol was added, and a reaction was then conducted for 10 hours at 260°C. A rosin-modified phenolic resin with an acid number of not more than 20, a weight average molecular weight of 50,000 and a cloud point in AF Solvent No. 6 (manufactured by Nippon Petrochemicals Co., Ltd.) of 90°C was obtained. The cloud point refers to the temperature described below. Namely, first, 90% by weight of the AF solvent medium manufactured by Nippon Petrochemicals Co., Ltd. and 10% by weight of the resin are placed in a test tube, and the resin is then dissolved at 200°C, forming a resin solution. Subsequently, the temperature of the resin solution is gradually lowered. The point where the resin solution becomes cloudy is deemed the cloud point. A lower cloud point indicates a superior solubility of the resin in the solvent.

Varnish Production Example

40 parts of the rosin-modified phenolic resin, 15 parts of wood oil, 30 parts of soybean oil, 14 parts of AF Solvent No. 7 (a solvent manufactured by Nippon Petrochemicals Co., Ltd.) and 1.0 parts of ALCH (a gelling agent manufactured by Kawaken Fine Chemicals Co., Ltd.) were heated for 1 hour at 190°C under constant stirring, yielding a varnish.

Ink Example G1 (Yellow Ink)

55 parts of the varnish obtained above was added gradually to a C.I. Pigment Yellow 12 (LIONOL YELLOW 1235-P, manufactured by Toyo Ink Mfg. Co., Ltd.) in a kneader under conditions including a temperature of 75°C, thus forming a mixture. The mixture was kneaded, and a primary dewatering was conducted. Subsequently, with the kneader temperature set to 100 to 120°C, and under reduced pressure conditions of 76 mmHg, the kneader was evacuated for one hour, thereby conducting a secondary dewatering that reduced the moisture within the mixture to not more than 0.5% by weight. Following dewatering, 14 parts of the varnish and 6 parts of a petroleum-based solvent (AF Solvent No. 5, manufactured by Nippon Petrochemicals Co., Ltd.) were added and kneaded to dilute the mixture, and the resulting undispersed base ink was then removed from the kneader. The removed undispersed base ink was then milled using a 3-roll mill with the roll temperature set to 60°C, until the particle size of the pigment, as measured by a dispersed particle size measuring device (a grind meter), was not greater than 7.5 $\mu$m, thereby yielding a yellow base ink G1. Subsequently, 50 parts of the thus obtained base ink G1 was combined with 35 parts of the varnish, 8 parts of a soybean oil, 5 parts of a compound (New Abrasion Resistance Compound, manufactured by Toyo Ink Mfg. Co., Ltd.), 1.5 parts of a metal drier (DRN Drier IK, manufactured by Toyo Ink Mfg. Co., Ltd.), and 0.5 parts of a drying inhibitor (Drying Inhibitor CP, manufactured by Toyo Ink Mfg. Co., Ltd.), thus yielding a yellow ink G1.

Ink Example G2 (Magenta Ink)

Using the same procedure as that described for the yellow ink G1, 36 parts of a C.I. Pigment Red 81 (FANAL ROSE RNN-P, manufactured by Fuji-Kasei Co., Ltd.), 61 parts of the vanish and 3 parts of the petroleum-based solvent were used to prepare a magenta base ink G2. Subsequently, 75 parts of the magenta base ink G2 was combined with 10 parts of the varnish, 8 parts of the soybean oil, 5 parts of the compound, 1.5 parts of the metal drier, and 0.5 parts of the drying inhibitor, thus yielding a magenta ink G2.

Ink Example G3 (Cyan Ink)

17 parts of a C.I. Pigment Blue 15:3 (LIONOL BLUE GLA-SD, manufactured by Toyo Ink Mfg. Co., Ltd., specific surface area: 74.625 m$^2$/g) and 1.5 parts of a C.I. Pigment Green 7 (LIONOL GREEN YS-2A, manufactured by Toyo Ink Mfg. Co., Ltd.) were mixed with 64.5 parts of the varnish, and milling was conducted until the particle size of the pigments, as measured by a dispersed particle size measuring device (a grind meter), was not greater than 7.5 $\mu$m. 10 parts of the soybean oil, 5 parts of the compound, 1.5 parts of the metal drier, and 0.5 parts of the drying inhibitor were then added to the mixture, yielding a cyan ink G3.

Typical oxidation polymerization-type lithographic printing inks (the various color TK Hy-Unity inks (manufactured by Toyo Ink Mfg. Co., Ltd.)) were used as comparative example inks.

Printing Evaluation Test

Using the ink combinations shown in Table G1, ECI2002R charts (1,485 colors: Gretag Macbeth) were printed under the printing conditions listed below. RandotX manufactured by Dainippon Screen Mfg. Co., Ltd. was used as the FM screen, and a 175-line screen was used as the AM screen. As the black ink, a typical oxidation polymerization-type lithographic printing ink (TK Hy-Unity Black (manufactured by Toyo Ink Mfg. Co., Ltd.)) was used.

Printing Conditions

Printer: Heidelberg Speedmaster, a kikuzen-size 4-color printer (manufactured by Heidelberg Japan)
Paper: Tokubishi Art double-sided 110 kg (manufactured by Mitsubishi Paper Mills Ltd.)
Dampening Water: a 4.0% tap water solution of Astro Mark 3 Plus (manufactured by Nikken Chemical Laboratory Ltd.)
Print Speed: 9,000 sheets/hour
Density: the density values of the monochromatic (yellow, magenta, cyan and black) solid portions within the printed item were measured using a D196 (Gretag Macbeth). Yellow: 1.40 to 1.44, Magenta: 1.52 to 1.56, Cyan: 1.63 to 1.67, Black: 1.88 to 1.92.

Method of Evaluating Printed Items

The L*a*b* values for each printed chart were measured using a spectroscopic measuring device SpectroLino (manufactured by Gretag Macbeth). An ICC profile was then generated from the measurement results (using ProfileMaker from Gretag Macbeth).
Using the generated ICC profile and ColorThink from CHROMiX, Inc., a 3D gamut plot (L*a*b* color system) was prepared.

Comparisons of the 3D gamuts of the example G1 and the comparative example G1, and of the example G1 and the comparative example G2 are shown in FIG. G1 and FIG. G2 respectively. Furthermore, the L*a*b* measured values for the monochromatic solid portions and the solid overprinted portions are shown in Table G2.
The gamut plot of the example G1 is shown as a wire frame, whereas the gamut plots of the comparative examples G1 and G2 are represented by the filled-in portions. The top view is a view from the + direction along the L axis, the side views are views from the + direction along the a axis and the - direction along the b axis, and the perspective view is a view from the + directions along each of the L, a and b axes.

The existence of portions where the wire frame is not covered (portions where the wire frame is not within a filled-in region) indicates that the ink combination of the example has a broader color reproduction range than those of the ink combinations of the comparative examples. Furthermore, calculation of the number of reproducible colors using Photoshop (by Adobe Systems Inc.) revealed that the number for the example G1 was 1.25 times that of the comparative example G1, and 1.46 times that of the comparative example G2.

[Table G1]

| | Ink | Plate type | |
|---|---|---|---|
| Example G1 | Example inks (yellow, magenta and cyan) + black ink | FM screen | RandotX |
| Comparative example G1 | Example inks (yellow, magenta and cyan) + black ink | AM screen | 175 lines |
| Comparative example G2 | Comparative example inks (yellow, magenta, cyan and black) | FM screen | RandotX |

[Table G2]

| | | Density | L | a | b | C |
|---|---|---|---|---|---|---|
| Example G1 | Yellow ink | 1.43 | 88.5 | -4.5 | 98.9 | 99.0 |
| | Magenta ink | 1.55 | 51.5 | 80.0 | -15.7 | 81.5 |
| | Cyan ink | 1.67 | 53.1 | -41.5 | -51.5 | 66.1 |
| | Yellow ink × magenta ink | - | 51.6 | 68.0 | 58.8 | 89.9 |
| | Magenta ink × cyan ink | - | 25.6 | 32.0 | -64.7 | 72.2 |
| | Cyan ink × yellow ink | - | 49.0 | -79.8 | 30.8 | 85.6 |
| Comparative example G1 | Yellow ink | 1.44 | 88.0 | -5.1 | 99.7 | 99.8 |
| | Magenta ink | 1.55 | 50.8 | 80.0 | -16.0 | 81.6 |
| | Cyan ink | 1.65 | 52.2 | -41.7 | -51.8 | 66.5 |
| | Yellow ink × magenta ink | - | 50.9 | 67.5 | 60.2 | 90.4 |
| | Magenta ink × cyan ink | - | 23.7 | 32.5 | -64.1 | 71.9 |
| | Cyan ink × yellow ink | - | 49.9 | -79.1 | 29.9 | 84.6 |
| Comparative example G2 | Yellow ink | 1.43 | 85.5 | -6.0 | 95.5 | 95.7 |
| | Magenta ink | 1.54 | 48.0 | 72.0 | -7.5 | 72.4 |
| | Cyan ink | 1.66 | 53.5 | -37.0 | -50.7 | 62.8 |
| | Yellow ink × magenta ink | - | 47.0 | 65.3 | 49.0 | 81.6 |
| | Magenta ink × cyan ink | - | 22.0 | 11.1 | -50.8 | 52.0 |
| | Cyan ink × yellow ink | - | 47.7 | -73.0 | 23.6 | 76.7 |

(Preparation Example I)

Rosin-modified Phenolic Resin Production Example

A four-necked flask fitted with a stirrer, a condenser, and a thermometer was charged with 1,000 parts of p-octylphenol, 850 parts of 35% formalin, 60 parts of 93% sodium hydroxide, and 1,000 parts of toluene, and the resulting mixture was reacted for 6 hours at 90°C. Subsequently, a hydrochloric acid solution comprising 125 parts of 6N hydrochloric acid and 1,000 parts of tap water was added to the mixture, and following stirring and settling, the supernatant phase was removed from the mixture, yielding 2,000 parts of a toluene solution of a resol-type phenolic resin with a non-volatile fraction of 49%. This solution was used as a resol solution.

A four-necked flask fitted with a stirrer, a condenser fitted with a moisture separation device, and a thermometer was charged with 1,000 parts of a gum rosin, the rosin was melted at 200°C under a stream of nitrogen gas, and 1,800 parts of the resol solution produced above was added, yielding a mixture. Following reaction of the mixture for 4 hours at 230°C while the toluene was removed, 110 parts of glycerol was added, and a reaction was then conducted for 10 hours at 260°C. A rosin-modified phenolic resin with an acid number of not more than 20, a weight average molecular weight of 50,000 and a cloud point in AF Solvent No. 6 (manufactured by Nippon Petrochemicals Co., Ltd.) of 90°C was obtained.

The cloud point refers to the temperature described below. Namely, first, 90% by weight of the AF solvent medium manufactured by Nippon Petrochemicals Co., Ltd. and 10% by weight of the resin are placed in a test tube, and the resin is then dissolved at 200°C, forming a resin solution. Subsequently, the temperature of the resin solution is gradually lowered. The point where the resin solution becomes cloudy is deemed the cloud point. A lower cloud point indicates a superior solubility of the resin in the solvent.

Varnish Production Example

40 parts of the rosin-modified phenolic resin, 15 parts of wood oil, 30 parts of soybean oil, 14 parts of AF Solvent No. 7 (a solvent manufactured by Nippon Petrochemicals Co., Ltd.) and 1.0 parts of ALCH (a gelling agent manufactured by Kawaken Fine Chemicals Co., Ltd.) were heated for 1 hour at 190°C under constant stirring, yielding a varnish.

Ink Example I1 (Yellow Ink)

Using the formulation shown in Table I1, 60 parts of the varnish obtained above was added gradually to a C.I. Pigment Yellow 12 (LIONOL YELLOW 1235-P, manufactured by Toyo Ink Mfg. Co., Ltd.) in a kneader under conditions including a temperature of 75°C, thus forming a mixture. The mixture was kneaded, and a primary dewatering was conducted. Subsequently, with the kneader temperature set to 100 to 120°C, and under reduced pressure conditions of 76 mmHg, the kneader was evacuated for one hour, thereby conducting a secondary dewatering that reduced the moisture within the mixture to not more than 0.5% by weight. Following dewatering, the remainder of the varnish and AF Solvent No. 5 were added and kneaded to dilute the mixture, and the resulting undispersed base ink was then removed from the kneader. The removed undispersed base ink was then milled using a 3-roll mill with the roll temperature set to 60°C, until the particle size of the pigment, as measured by a dispersed particle size measuring device (a grind meter), was not greater than 7.5 μm, thereby yielding a yellow base ink I1. Subsequently, using the formulation shown in Table 2, the base ink I1 was combined with the varnish, soybean oil, a compound (New Abrasion Resistance Compound, manufactured by Toyo Ink Mfg. Co., Ltd.), a metal drier (DRN Drier IK, manufactured by Toyo Ink Mfg. Co., Ltd.) and a drying inhibitor (Drying Inhibitor CP, manufactured by Toyo Ink Mfg. Co., Ltd.), thus yielding a yellow ink I1.

Ink Example I2 (Magenta Ink)

Using the same procedure as that described for the yellow ink I1 and using the formulation shown in Table I1, a C.I. Pigment Red 81 (FANAL ROSE RNN-P, manufactured by Fuji-Kasei Co., Ltd.) was used to prepare a magenta base ink I2. Subsequently, using the formulation shown in Table I2, the vegetable oil, petroleum-based solvent, compound, metal drier and drying inhibitor were added to the base ink I2, thus yielding a magenta ink I2.

Ink Example I3 (Magenta Ink)

Using the formulation shown in Table I1, a C.I. Pigment Red 169 (FANAL PINK D 4810, manufactured by BASF Corporation) was mixed with the varnish and a petroleum-based solvent. The mixture was then milled until the particle size of the pigment, as measured by a dispersed particle size measuring device (a grind meter), was not greater than 7.5 μm, thereby yielding a yellow base ink 3. Subsequently, using the formulation shown in Table I2, the vegetable oil, petroleum-based solvent, compound, metal drier and drying inhibitor were added to the base ink 3, thus yielding a magenta ink 3.

Ink Example I4 (Magenta Ink)

The base inks I2 and I3 prepared using the formulations shown in Table 1 were mixed using the formulation shown on Table I2, and the vegetable oil, petroleum-based solvent, compound, metal drier and drying inhibitor were then added to the mixture, thus yielding a magenta ink I4.

Ink Example I5 (Cyan Ink)

Using the formulation shown in Table I2, a C.I. Pigment Blue 15:3 (LIONOL BLUE GLA-SD, manufactured by Toyo Ink Mfg. Co., Ltd., specific surface area: 74.625 m$^2$/g) and a C.I. Pigment Green 7 (LIONOL GREEN YS-2A, manufactured by Toyo Ink Mfg. Co., Ltd.) were mixed with the varnish. The mixture was then milled until the particle size of the pigments, as measured by a dispersed particle size measuring device (a grind meter), was not greater than 7.5 μm. The soybean oil, compound, metal drier and drying inhibitor were then added to the mixture, yielding a cyan ink 15.

Typical oxidation polymerization-type lithographic printing inks (the various color TK Hy-Unity inks (manufactured by Toyo Ink Mfg. Co., Ltd.)) were used as comparative example inks.

Printing Evaluation Test

Using the inks of the examples and comparative example described above, monochromatic solid printing and solid overprinting were conducted under the printing conditions listed below. As the black ink, a typical oxidation polymerization-type lithographic printing ink (TK Hy-Unity Black (manufactured by Toyo Ink Mfg. Co., Ltd.)) was used.

Printing Conditions

Printer: Heidelberg Speedmaster, a kikuzen-size 4-color printer (manufactured by Heidelberg Japan)
Paper: Tokubishi Art double-sided 110 kg (manufactured by Mitsubishi Paper Mills Ltd.)
Dampening Water: a 2.0% tap water solution of Astro Mark 3 (manufactured by Nikken Chemical Laboratory Ltd.)
Print Speed: 10,000 sheets/hour
Density: the density values of the monochromatic (yellow, magenta, cyan and black) solid printed portions within the printed item were measured using a Gretag Macbeth D196. Yellow: 1.40 to 1.44, Magenta: 1.52 to 1.56, Cyan: 1.63 to 1.67, Black: 1.88 to 1.92.

Method of Evaluating Printed Items

Color Measurement: Using an X-Rite 938, the L*a*b* values for the monochromatic solid portions (yellow, magenta and cyan) and the monochromatic solid overprinted portions (yellow × magenta, magenta × cyan, cyan × yellow) of the printed item were measured.
The C value was determined from the a* and b* values, using the formula shown below.

[Formula I1]

$$C = \sqrt{(a*)^2 + (b*)^2}$$

Gloss: the 60°-60° reflective gloss was measured using a digital gloss meter, manufactured by Murakami Color Research Laboratory Co., Ltd.
Spectral Reflectance: the spectral reflectance of the ink was measured using a Gretag Macbeth Spectro Eye (45/0, D50, 2-degree observer, Status T, Paper zero).

The results are shown in Table I3. The C values were larger for the examples than for the comparative example. In other words, the chroma of the printed items was higher in the examples. Furthermore, when the results were compared in a two dimensional gamut obtained by plotting each of the a* and b* values within a two dimensional space with a* along the transverse axis and b* along the longitudinal axis, the examples yielded broader color reproduction ranges than the comparative example (see FIG. I1).

Furthermore, the spectral reflectance curves obtained are shown in FIG. I2. Compared with the conventional inks of the comparative example, the inks of the example produced curves that were closer to the ideal spectral reflectance curves, and the absorption within those wavelength regions for which total reflection is required was considerably less. Consequently, the ink turbidity component decreased, meaning that when these inks were used, the color reproduction range was broader (see FIG. I1).

[Table I1]

|  | Base Ink I1 | Base Ink I2 | Base Ink I3 |
|---|---|---|---|
| LIONOL YELLOW 1235P | 25 |  |  |
| FANAL ROSE RNN-P |  | 35 |  |
| FANAL PINK D4810 |  |  | 25 |
| Varnish | 69 | 61 | 68 |
| Petroleum-based solvent | 6 | 4 | 7 |
|  |  |  |  |
| Total | 100 | 100 | 100 |

[Table I2]

|  | Example | | | | |
|---|---|---|---|---|---|
|  | Yellow ink I1 | Magenta ink I2 | Magenta ink I3 | Magenta ink I4 | Cyan ink I5 |
| Base ink I1 | 50 |  |  |  |  |
| Base ink I2 |  | 75 |  | 43 |  |
| Base ink I3 |  |  | 72 | 43 |  |
| LIONOL BLUE GLA-SD |  |  |  |  | 17 |
| LIONOL GREEN YS-2A |  |  |  |  | 1.5 |
| Varnish | 35 | 10 | 13 | 2 | 64.5 |
| Soybean oil | 8 | 8 | 8 | 5 | 10 |
| Compound | 5 | 5 | 5 | 5 | 5 |
| Metal drier | 1.5 | 1.5 | 1.5 | 1.5 | 1.5 |
| Drying inhibitor | 0.5 | 0.5 | 0.5 | 0.5 | 0.5 |
|  |  |  |  |  |  |
| Total | 100 | 100 | 100 | 100 | 100 |

[Table I3]

|  |  | Density | Gloss | L | a | b | C |
|---|---|---|---|---|---|---|---|
| Example I1 | Yellow ink 1 | 1.44 | 77.8 | 92.9 | -9.8 | 98.5 | 99.0 |
|  | Magenta ink 2 | 1.55 | 71.7 | 53.9 | 80.4 | -16.7 | 82.1 |
|  | Cyan ink 5 | 1.66 | 63.5 | 56.2 | -44.0 | -50.4 | 66.9 |
|  | Yellow ink 1 × magenta ink 2 | - | 87.1 | 54.1 | 68.0 | 59.2 | 90.2 |
|  | Magenta ink 2 × cyan ink 5 | - | 82.6 | 26.9 | 30.5 | -66.0 | 72.7 |
|  | Cyan ink 5 × yellow ink 1 | - | 85.9 | 51.2 | -80.3 | 25.7 | 84.3 |

(continued)

| | | Density | Gloss | L | a | b | C |
|---|---|---|---|---|---|---|---|
| Example **I2** | Yellow ink 1 | 1.42 | 78.0 | 93.0 | -9.9 | 98.0 | 98.5 |
| | Magenta ink 3 | 1.55 | 71.0 | 54.1 | 79.9 | -17.8 | 81.9 |
| | Cyan ink 5 | 1.65 | 63.6 | 56.5 | -43.7 | -51.0 | 67.2 |
| | Yellow ink 1 × magenta ink 3 | - | 85.5 | 54.9 | 68.8 | 59.0 | 90.6 |
| | Magenta ink 3 × cyan ink 5 | - | 81.8 | 28.0 | 31.8 | -66.9 | 74.1 |
| | Cyan ink 5 × yellow ink 1 | - | 84.5 | 51.0 | -81.2 | 25.2 | 85.0 |
| Example I3 | Yellow ink 1 | 1.42 | 78.0 | 93.0 | -9.9 | 98.0 | 98.5 |
| | Magenta ink 4 | 1.54 | 71.3 | 54.0 | 80.5 | -17.0 | 82.3 |
| | Cyan ink 5 | 1.65 | 63.6 | 56.5 | -43.7 | -51.0 | 67.2 |
| | Yellow ink 1 × magenta ink 4 | - | 85.7 | 54.1 | 68.7 | 59.0 | 90.6 |
| | Magenta ink 4 × cyan ink 5 | - | 82.0 | 27.6 | 31.7 | -66.8 | 73.9 |
| | Cyan ink 5 × yellow ink 1 | - | 84.5 | 51.0 | -81.2 | 25.2 | 85.0 |
| Comparative example I1 | Yellow ink | 1.42 | 73.5 | 86.8 | -8.0 | 96.7 | 97.0 |
| | Magenta ink | 1.55 | 70.2 | 44.9 | 74.0 | -5.0 | 74.1 |
| | Cyan ink | 1.64 | 61.3 | 54.6 | -22.4 | -47.7 | 52.7 |
| | Yellow ink × magenta ink | - | 71.9 | 44.1 | 64.8 | 40.3 | 76.3 |
| | Magenta ink × cyan ink | - | 78.1 | 20.4 | 28.8 | -47.9 | 55.9 |
| | Cyan ink × yellow ink | - | 74.4 | 48.2 | -74.7 | 28.5 | 79.9 |

**Claims**

1. A lithographic printing method that uses inks selected from amongst yellow, magenta, cyan and black inks, the method comprising:

    using yellow, magenta and cyan inks for which L*a*b* values for each color which monochromatic solid printing of the yellow, magenta and cyan inks is conducted at standard density values are within ranges described below, and for which L*a*b* values for each color which solid overprinting is conducted at standard density values using two inks selected from amongst the yellow, magenta and cyan inks are within ranges described below, wherein
    the standard density values are from 1.40 to 1.44 for yellow, from 1.52 to 1.56 for magenta, and from 1.63 to 1.67 for cyan,
    L*a*b* values
    for the yellow ink are L*: 87 to 95, a*: -4 to -12, and b*: 90 to 100,
    for the magenta ink are L*: 50 to 55, a*: 75 to 83, and b*: -14 to -20,
    for the cyan ink are L*: 52 to 58, a*: -40 to -45, and b*: -45 to -53,
    for magenta and yellow ink overprinting are L*: 51 to 56, a*: 65 to 70, and b*: 56 to 61,
    for cyan and yellow ink overprinting are L*: 47 to 53, a*: -77 to -83, and b*: 25 to 32, and
    for cyan and magenta overprinting are L*: 23 to 29, a*: 28 to 33, and b*: -63 to - 68,
    wherein the yellow ink comprises a yellow pigment selected from C.I. Pigment Yellow 12 and C.I. Pigment Yellow 13, and exhibits a L* value of not more than 17 when solid printed at a density value within a range from 1.40 to 2.10 on top of the black ink that has been printed at a density value within a range from 1.85 to 1.90,
    the magenta ink comprises a pigment selected from C.I. Pigment Red 81 and C.I. Pigment Violet 1,
    the cyan ink comprises a β-type copper phthalocyanine with a specific surface area of at least 74 m$^2$/g which is selected from C.I. Pigment Blue 15:3 and C.I. Pigment Blue 15:4, and
    the black ink comprises C.I. Pigment Black 7.

**2.** A lithographic printing method according to claim 1, the method comprising:

using magenta and cyan inks for which L*a*b* values for each color which monochromatic solid printing of the magenta and cyan inks is conducted at standard density values are within ranges described below, and for which L*a*b* values for each color which solid overprinting is conducted using the magenta and cyan inks at standard density values are within ranges described below, wherein
the standard density values are from 1.52 to 1.56 for magenta, and from 1.63 to 1.67 for cyan, and L*a*b* values for
the magenta ink are L*: 50 to 55, a*: 75 to 83, and b*: -14 to -20,
for the cyan ink are L*: 52 to 58, a*: -40 to -45, and b*: -45 to -53, and
for magenta and cyan ink overprinting are L*: 23 to 29, a*: 28 to 33, and b*: -63 to -68.

**3.** A lithographic printing method according to claim 2, which further uses yellow and black inks.

**4.** A lithographic printing method according to claim 1, that uses inks selected from amongst yellow, magenta, cyan and black inks, and uses a plate formed by a frequency modulated screening process, the method comprising:

using yellow, magenta and cyan inks for which L*a*b* values for each color which monochromatic solid printing of the yellow, magenta and cyan inks is conducted at standard density values are within ranges described below, and for which L*a*b* values for each color which solid overprinting is conducted at standard density values using two inks selected from amongst the yellow, magenta and cyan inks are within ranges described below, wherein
the standard density values are from 1.40 to 1.44 for yellow, from 1.52 to 1.56 for magenta, and from 1.63 to 1.67 for cyan,
L*a*b* values for
the yellow ink are L*: 87 to 95, a*: -4 to -12, and b*: 90 to 100,
for the magenta ink are L*: 50 to 55, a*: 75 to 83, and b*: -14 to -20,
for the cyan ink are L*: 52 to 58, a*: -40 to -45, and b*: -45 to -53,
for magenta and yellow ink overprinting are L*: 51 to 56, a*: 65 to 70, and b*: 56 to 61,
for cyan and yellow ink overprinting are L*: 47 to 53, a*: -77 to -83, and b*: 25 to 32, and
for cyan and magenta overprinting are L*: 23 to 29, a*: 28 to 33, and b*: -63 to - 68.

**5.** A printed item obtained by conducting printing using the lithographic printing method according to any one of claims 1 to 4.

**6.** An ink set used in the lithographic printing method according to any one of claims 1 to 4.


**Patentansprüche**

**1.** Lithografisches Druckverfahren, das Tinten ausgewählt aus gelber, magentafarbiger, cyanfarbiger und schwarzer Tinte verwendet, wobei das Verfahren aufweist:

Verwenden von gelber, magentafarbiger und cyanfarbiger Tinte, für die die L*a*b*-Werte für jede Farbe, für die das monochrome vollfarbige Drucken der Tinte in den Farben Gelb, Magenta und Cyan in Standarddichtewerten durchgeführt wird, in den unten beschriebenen Bereichen liegen, und für die die L*a*b*-Werte für jede Farbe, für die ein vollfarbiges Überdrucken in Standarddichtewerten mit zwei Tinten durchgeführt wird, die aus den Tinten in den Farben Gelb, Magenta und Cyan ausgewählt wurden, in den im Folgenden beschriebenen Bereichen liegen, wobei
die Standarddichtewerte für Gelb zwischen 1,40 und 1,44 liegen, für Magenta zwischen 1,52 bis 1,56 und für Cyan zwischen 1,63 bis 1,67, und
die L*a*b*-Werte lauten
für gelbe Tinte L*: 87 bis 95, a*: -4 bis -12 und b*: 90 bis 100,
für magentafarbige Tinte L*: 50 bis 55, a*: 75 bis 83 und b*: -14 bis -20,
für cyanfarbige Tinte L*: 52 bis 58, a*: -40 bis -45 und b*: -45 bis -53,
für das Überdrucken mit gelber und magentafarbiger Tinte L*: 51 bis 56, a*: 65 bis 70 und b*: 56 bis 61,
für das Überdrucken mit cyanfarbiger und gelber Tinte L*: 47 bis 53, a*: -77 bis - 83 und b*: 25 bis 32,
für das Überdrucken mit cyanfarbiger und magentafarbiger Tinte L*: 23 bis 29, a*: 28 bis 33 und b*: -63 bis -68,

wobei die gelbe Tinte ein gelbes Pigment aufweist, das aus C.I. Pigment Yellow 12 und C.I. Pigment Yellow 13 ausgewählt wird und einen L\*-Wert von nicht über 17 aufweist, wenn vollflächig mit einem Dichtewert in einem Bereich von 1,40 bis 2,10 auf der schwarzen Tinte gedruckt wird, die mit einem Dichtewert im Bereich von 1,85 bis 1,90 gedruckt wurde,

wobei die magentafarbige Tinte ein Pigment enthält, das aus C.I. Pigment Red 81 und C.I. Pigment Violet 1 ausgewählt ist,

wobei die cyanfarbige Tinte ein β-Modifikation-Kupferphtalocyanin mit einem spezifischen Flächeninhalt von mindestens 74 m$^2$/g aufweist, das aus C.I. Pigment Blue 15:3 und C.I. Pigment Blue 15:4 ausgewählt wird, und die schwarze Tinte C.I. Pigment Black 7 enthält.

2. Lithografisches Druckverfahren gemäß Anspruch 1, wobei das Verfahren aufweist:

Verwenden von magentafarbiger und cyanfarbiger Tinte, für die die L\*a\*b\*-Werte für jede Farbe, für die das monochrome vollfarbige Drucken von magentafarbiger und cyanfarbiger Tinte in Standarddichtewerten durchgeführt wird, in den unten beschriebenen Bereichen liegen, und für die die L\*a\*b\*-Werte für jede Farbe, für die ein vollfarbiges Überdrucken mit magentafarbiger und cyanfarbiger Tinte in den Standarddichtewerten durchgeführt wird, in dem im Folgenden beschrieben Bereich liegen, wobei die Standarddichtewerte zwischen 1,52 und 1,56 für Magenta und zwischen 1,63 und 1,67 für Cyan liegen, und die L\*a\*b\*-Werte lauten

für magentafarbige Tinte L\*: 50 bis 55, a\*: 75 bis 83 und b\*: -14 bis -20,
für cyanfarbige Tinte L\*: 52 bis 58, a\*: -40 bis -45 und b\*: -45 bis -53, und
für das Überdrucken mit magentafarbiger und cyanfarbiger Tinte L\*: 23 bis 29, a\*: 28 bis 33, b\*: -63 bis -68.

3. Lithografisches Druckverfahren gemäß Anspruch 2, das weiterhin gelbe und schwarze Tinte verwendet.

4. Lithografisches Druckverfahren gemäß Anspruch 1, das Tinten ausgewählt aus gelber, magentafarbiger, cyanfarbiger und schwarzer Tinte verwendet und eine Platte verwendet, die durch einen frequenzmodulierten Rasterungsprozess gebildet wird, wobei das Verfahren aufweist:

Verwenden von gelber, magentafarbiger und cyanfarbiger Tinte, für die die L\*a\*b\*-Werte für jede Farbe, für die das monochrome vollfarbige Drucken der gelben, magentafarbigen und cyanfarbigen Tinte in Standarddichtewerten durchgeführt wird, in den unten beschriebenen Bereichen liegen, und für die die L\*a\*b\*-Werte für jede Farbe, für die ein vollfarbiges Überdrucken in Standarddichtewerten mit zwei Tinten durchgeführt wird, die aus der gelben, magentafarbigen und cyanfarbigen Tinte ausgewählt werden, in den im Folgenden beschriebenen Bereichen liegen, wobei die Standarddichtewerte für Gelb zwischen 1,40 und 1,44 liegen, für Magenta zwischen 1,52 bis 1,56 und für Cyan zwischen 1,63 bis 1,67, und die L\*a\*b\*-Werte lauten

für gelbe Tinte L\*: 87 bis 95, a\*: -4 bis -12, und b\*: 90 bis 100,
für magentafarbige Tinte L\*: 50 bis 55, a\*: 75 bis 83 und b\*: -14 bis -20,
für cyanfarbige Tinte L\*: 52 bis 58, a\*: -40 bis -45 und b\*: -45 bis -53,
für das Überdrucken mit magentafarbiger und gelber Tinte L\*: 51 bis 56, a\*: 65 bis 70 und b\*: 56 bis 61,
für das Überdrucken mit cyanfarbiger und gelber Tinte L\*: 47 bis 53, a\*: -77 bis - 83 und b\*: 25 bis 32, und
für das Überdrucken mit cyanfarbiger und magentafarbiger Tinte L\*: 23 bis 29, a\*: 28 bis 33 und b\*: -63 bis -68.

5. Ein Druckobjekt, das durch Durchführen des Drucks mit dem lithographischen Druckverfahren gemäß einem der Ansprüche 1 bis 4 erhalten wird.

6. Ein in dem lithographischen Druckverfahren verwendetes Tintenset gemäß einem der Ansprüche 1 bis 4.

**Revendications**

1. Procédé d'impression lithographique utilisant des encres choisies parmi des encres jaune, magenta, cyan et noire, le procédé comprenant :

l'utilisation d'encres jaune, magenta et cyan pour lesquelles les valeurs L\*a\*b\* pour chaque couleur dont l'impression solide monochromatique des encres jaune, magenta et cyan est réalisée à des valeurs de densité standard sont dans des intervalles décrits ci-dessous, et pour lesquelles les valeurs L*a*b* pour chaque couleur dont la surimpression solide est réalisée à des valeurs de densité standard en utilisant deux encres choisies parmi les encres jaune, magenta et cyan sont dans des intervalles décrits ci-dessous, dans lequel

les valeurs de densité standard vont de 1,40 à 1,44 pour le jaune, de 1,52 à 1,56 pour le magenta et de 1,63 à 1,67 pour le cyan,

les valeurs L*a*b* sont

pour l'encre jaune, L* : 87 à 95, a* : -4 à -12 et b* : 90 à 100,

pour l'encre magenta, L* : 50 à 55, a* : 75 à 83 et b* : -14 à -20,

pour l'encre cyan, L* : 52 à 58, a* : -40 à -45 et b* : -45 à -53,

pour la surimpression des encres magenta et jaune, L* : 51 à 56, a* : 65 à 70 et b* : 56 à 61,

pour la surimpression des encres cyan et jaune, L* : 47 à 53, a* : -77 à -83 et b* : 25 à 32, et

pour la surimpression des encres cyan et magenta, L* : 23 à 29, a* : 28 à 33 et b* : -63 à -68,

dans lequel l'encre jaune comprend un pigment jaune choisi parmi le pigment C.I. jaune 12 et le pigment C.I. jaune 13, et présente une valeur L* ne dépassant pas 17 quand elle est imprimée solide avec une valeur de densité comprise dans un intervalle de 1,40 à 2,10 par dessus l'encre noire qui a été imprimée avec une valeur de densité comprise dans un intervalle de 1,85 à 1,90,

l'encre magenta comprend un pigment choisi parmi le pigment C.I. rouge 81 et le pigment C.I. violet 1,

l'encre cyan comprend une phtalocyanine de cuivre de type β avec une surface spécifique d'au moins 74 m$^2$/g qui est choisie parmi le pigment C.I. bleu 15:3 et le pigment C.I. bleu 15:4, et

l'encre noire comprend le pigment C.I. noir 7.

2. Procédé d'impression lithographique selon la revendication 1, le procédé comprenant :

l'utilisation d'encres magenta et cyan pour lesquelles les valeurs L*a*b* pour chaque couleur dont l'impression solide monochromatique des encres magenta et cyan est réalisée à des valeurs de densité standard sont dans des intervalles décrits ci-dessous, et pour lesquelles les valeurs L*a*b* pour chaque couleur dont la surimpression solide est réalisée en utilisant les encres magenta et cyan à des valeurs de densité standard sont dans des intervalles décrits ci-dessous, dans lequel

les valeurs de densité standard vont de 1,52 à 1,56 pour le magenta et de 1,63 à 1,67 pour le cyan, et

les valeurs L*a*b* sont

pour l'encre magenta, L* : 50 à 55, a* : 75 à 83 et b* : -14 à -20,

pour l'encre cyan, L* : 52 à 58, a* : -40 à -45 et b* : -45 à -53, et

pour la surimpression des encres magenta et cyan, L* : 23 à 29, a* : 28 à 33 et b* : -63 à -68.

3. Procédé d'impression lithographique selon la revendication 2, qui utilise en outre des encres jaune et noire.

4. Procédé d'impression lithographique selon la revendication 1, qui utilise des encres choisies parmi les encres jaune, magenta, cyan et noire, et qui utilise une plaque formée par un processus de tamisage modulé en fréquence, le procédé comprenant :

l'utilisation d'encres jaune, magenta et cyan pour lesquelles les valeurs L*a*b* pour chaque couleur dont l'impression solide monochromatique des encres jaune, magenta et cyan est réalisée à des valeurs de densité standard sont dans des intervalles décrits ci-dessous, et pour lesquelles les valeurs L*a*b* pour chaque couleur dont la surimpression solide est réalisée à des valeurs de densité standard en utilisant deux encres choisies parmi les encres jaune, magenta et cyan sont dans des intervalles décrits ci-dessous, dans lequel

les valeurs de densité standard vont de 1,40 à 1,44 pour le jaune, de 1,52 à 1,56 pour le magenta et de 1,63 à 1,67 pour le cyan,

les valeurs L*a*b* sont

pour l'encre jaune, L* : 87 à 95, a* : -4 à -12 et b* : 90 à 100,

pour l'encre magenta, L* : 50 à 55, a* : 75 à 83 et b* : -14 à -20,

pour l'encre cyan, L* : 52 à 58, a* : -40 à -45 et b* : -45 à -53,

pour la surimpression des encres magenta et jaune, L* : 51 à 56, a* : 65 à 70 et b* : 56 à 61,

pour la surimpression des encres cyan et jaune, L* : 47 à 53, a* : -77 à -83 et b* : 25 à 32, et

pour la surimpression des encres cyan et magenta, L* : 23 à 29, a* : 28 à 33 et b* : -63 à -68.

5. Article imprimé obtenu en exécutant une impression utilisant le procédé d'impression lithographique selon l'une quelconque des revendications 1 à 4.

**6.** Ensemble d'encres utilisé dans le procédé d'impression lithographique selon l'une quelconque des revendications 1 à 4.

# FIG. B1

FIG. D1

**FIG. G1**

Top view (L axis: + direction)

Side view (a axis: + direction)

Side view (b axis: − direction)

Perspective view

**FIG. G2**

Top view (L axis: + direction)

Side view (a axis: + direction)

Side view (b axis: – direction)

Perspective view

# FIG. I1

## FIG. I2

## FIG. I13

Ideal spectral reflectance spectrum: Yellow

Ideal spectral reflectance spectrum: Yellow

Ideal spectral reflectance spectrum: Cyan

## REFERENCES CITED IN THE DESCRIPTION

### Patent documents cited in the description

- JP 2001260516 A
- WO 2004000949 A
- JP 2005290197 A
- JP 2005290201 A
- JP 2005290198 A
- JP 2005290200 A
- JP 2005290199 A
- JP 2005353642 A
- JP 2005353643 A
- JP 2005353644 A
- JP 2006263610 A
- JP 2006263618 A
- JP 2006271190 A

### Non-patent literature cited in the description

- **AKIHIRO KINOSHITA.** Kokusai Insatsu Daigakko Kenkyu Hokoku. Kokusai Insatsu Daigakko, March 2005, vol. 5, 2-6
- **AKIHIRO KINOSHITA.** *Dai 2 Bu Konodo Insatsu Gazo,* 2003, 12-21
- **AKIHIRO KINOSHITA.** *3-1 Konodo Insatsu,* 2004, 3
- **KEN IKAI.** *Insatsu Zasshi,* 2002, vol. 85 (8), 31-3234-35
- **YOSHIYUKI HASHIZUME.** *Insatsu Zasshi,* 1996, vol. 79 (9), 15-18
- Dare demo Wakaxu 'Shin. Insatsu no Dekiru made. Fuji Photo Film, Co., Ltd, 2000, 32-34134, 137
- The Society of Synthetic Organic Chemistry. Kabushiki Kaisha CMC, 1988, 641-642669, 682, 687, 693
- Shinpen Shikisai Kagaku Handbook. University of Tokyo Press, 1998, 1106